# EUROPEAN PATENT APPLICATION

(11) **EP 1 748 314 A1**
(43) Date of publication of application: **31.01.2007**
(21) Application number: 05741413.8
(22) Date of filing: 19.05.2005
(51) Int. Cl.: G03B 21/00, G02B 27/18, G02F 1/13, G02F 1/1335

(54) **PROJECTOR**

(30) Priority: 20.05.2004 JP 2004150426
(71) Applicant: SEIKO EPSON CORPORATION, Tokyo 160-0811 (JP)
(72) Inventor: HASHIZUME, Toshiaki, Suwa-shi, Nagano 3928502 (JP); AKIYAMA, Koichi, Suwa-shi, Nagano 3928502 (JP)
(74) Representative: HOFFMANN EITLE
(86) International application number: PCT/JP2005/009138
(87) International publication number: WO 2005/114319

(57) **Abstract**

A color-separating optical device 30 included in an optical device 3 separates light beam irradiated from an illumination optical device 20 into three color lights of red, green and blue. The optical device 3 includes a concave lens 50 that is disposed in an optical path of the blue light having geometric length identical with that of the green light among optical paths of the three color lights extended from the illumination optical device 20 to the respective liquid crystal panels 42R, 42G, 42B, and adapted to correct an chromatic-aberration between the green light and blue light caused by the illumination optical device 20.

## Description

### [TECHNICAL FIELD]

Exemplary aspects of the present invention relate to a projector.

### [BACKGROUND ART]

There has been known a related art projector including an illumination optical device for focusing light beam irradiated from a light source at a predetermined position, a color-separating optical device for separating the light beam irradiated from the illumination optical device into three color lights of red, green and blue, an optical modulator for modulating the respective separated color lights in accordance with the image information, a color-combining optical device for combining the respective modulated color lights to form an optical image, and a projection optical device for projecting the formed optical image in an enlarged manner.
As the illumination optical device, an arrangement (an integrator illumination system) described below has been employed for equalizing intensity distribution of light beams irradiated from the light source (see, for example, Patent Literature 1.
The illumination optical device disclosed in the Patent Literature 1 includes a first lens array, a second lens array, and a superposing lens. The light beam irradiated from the light source is split into a plurality of sub-beams by a plurality of small lenses included in the first lens array. The plurality of sub-beams are superposed on an image formation area of the optical modulator by a superposing lens after passing through the second lens array having a plurality of small lenses corresponding to the plurality of small lenses of the first lens array. By splitting the light beam irradiated from the light source into the plurality of sub-beams and superposing the sub-beams on the image formation area of the optical modulator, the intensity distribution of the light irradiating the optical modulator can be substantially equalized.
[Patent Literature 1] JP2003-195135A, Fig.2

### [DISCLOSURE OF THE INVENTION]

### [PROBLEMS TO BE SOLVED BY THE INVENTION]

Refractive index of a typical optical lens varies depending on wavelength (color). Thus, in the projector disclosed in the Patent Literature 1, the respective color lights passed through the superposing lens are considered to be focused on focus positions respectively different from each other.
For instance, in the projector disclosed in the Patent Literature 1, the respective geometric lengths of optical paths of a blue light and a green light among optical paths of three color lights from the superposing lens to the respective optical modulators are substantially identical. In the optical lens, the refractive index of the blue light is greater than that of the green light.
Thus, in the blue light and green light passed through the superposing lens, a superposing focus position of the blue light is shorter than that of the green light. Thus, an illumination area having a uniform illuminance of the blue light illuminating the respective optical modulators is smaller than that of the green light.
Therefore, an optical designing of the superposing lens or a dispositional adjustment of optical components such as the optical modulator is required so that the illumination area of the blue light can substantially coincide with the image formation area of the optical modulator. When the optical designing or the dispositional adjustment is thus performed, although the illumination area of the blue light can substantially coincide with the image formation area of the optical modulator, the illumination area of the green light becomes larger than the image formation area of the optical modulator. In other words, an unused light area in the illumination area of the green light becomes large by the difference from the illumination area of the blue light. Therefore, brightness of the optical image decreases when the respective color lights are combined by the color-combining optical device.

Exemplary aspects of the present invention provide a projector capable of enhancing utilization efficiency of light beam irradiated from a light source.

### [MEANS FOR SOLVING THE PROBLEMS]

A projector according to an aspect of the present invention includes: an illumination optical device having an integrator illumination system for irradiating an illumination light beam; a color-separating optical device for separating the light beam irradiated by the illumination optical device into first, second and third color lights; first, second and third optical modulators for modulating the first through third color lights separated by the color-separating optical device in accordance with image information; a color-combining optical device for combining the color lights modulated by the first through third optical modulators to form an optical image; and a projection optical device for projecting the optical image formed by the color-combining optical device in an enlarged manner. A geometric length of an optical path from the illumination optical device to the first optical modulator is set to be identical with a geometric length of an optical path from the illumination optical device to the second optical modulator. A chromatic-aberration correcting optical element is disposed in at least one of the optical path of the first color light separated from the second color light to reach the first optical modulator and the optical path of the second color light separated from the first color light to reach the second optical modulator, the chromatic-aberration correcting optical element correcting chromatic aberration between the first color light and the second color light so that difference in size between a first illumination area on the first optical modulator and a second illumination area on the second optical modulator is minimized.

Instead of the arrangement having the superposing lens, the illumination optical device may employ an arrangement having a first lens array and a second lens array, in which the second lens array also serves as a superposing lens.
As the integrator illumination system, an arrangement having, for instance, an integrator rod using a columnar glass rod, a hollow glass rod, etc. and a relay lens may be employed instead of the arrangement having the first lens array, the second lens array and the superposing lens.
In the exemplary aspect of the present invention, the geometric length of the optical path of the first color light is set to be identical with that of the second color light, and the chromatic-aberration correcting optical element is disposed in at least one of the optical paths of the first color light and the second color light. The chromatic-aberration correcting optical element changes the focus position of at least one of the first color light and the second color light formed by the illumination optical device so that the optical lengths of the first color light and the second color light from the illumination optical device to the respective focus position become substantially identical, which can minimize difference in size between the illumination area having the uniform illuminance of the first color light illuminating the first optical modulator (hereinafter, referred to as the first illumination area) and the illumination area having the uniform illuminance of the second color light illuminating the second optical modulator (hereinafter, referred to as the second illumination area). Thus, difference of the illumination margins between the first color light and the second color light can be set to minimum, so that unused light areas which are not used in the optical modulators can be reduced. Therefore, as compared to the related-art arrangement without the chromatic-aberration correcting optical element, the light efficiency of the light beam irradiated from the light source can be enhanced. Further, with the enhanced light efficiency, an optical image enlarged and projected by the projection optical device can be projected clearly.

In the projector according to an exemplary aspect of the present invention, it is preferable that: the second color light has a wavelength range shorter than a wavelength range of the first color light; and the chromatic-aberration correcting optical element is constituted with a concave lens or a convex mirror, which is disposed only on the optical path of the second color light.
In the exemplary aspect of the present invention, only by disposing the concave lens or the convex mirror on the optical path of the second color light having the wavelength range shorter than the first color light, for instance, the focus position of the second color light formed by the illumination optical device can be moved to the downstream of the optical path, so that the optical lengths of the first color light and the second color light from the illumination optical device to the respective focus positions can be substantially identical. Accordingly, difference in size between the first illumination area and the second illumination area can be set to minimum. For instance, in an arrangement employing the concave lens as the chromatic-aberration correcting optical element, the object of the present invention can be achieved only by adding the concave lens to the related art arrangement, so that design of components of the related art optical system does not have to be changed. On the other hand, for instance, in an arrangement employing the convex mirror as the chromatic-aberration correcting optical element, if the reflection mirror that guides the second color light to the second optical modulator in the related art arrangement is replaced with the convex mirror, the object of the present invention can be achieved. Therefore, an additional component does not have to be provided to the related art optical system, which does not affect size reduction and weight reduction of the projector.

In the projector according to an exemplary aspect of the present invention, it is preferable that: the second color light has a wavelength range shorter than a wavelength range of the first color light; first, second and third condenser lenses are respectively disposed on the upstream of the first through third optical modulators; the chromatic-aberration correcting optical element is constituted with the second condenser lens; and the curvature radius of a lens surface of the second condenser lens is formed to be greater than the curvature radius of a lens surface of the first condenser lens.
In the exemplary aspect of the present invention, in the condenser lenses respectively disposed on the upstream of the optical paths of the optical modulators, only by forming the lens surface of the second condenser lens disposed in the optical path of the second color light having the wavelength range shorter than that of the first color light so that the radius curvature thereof is greater than that of the lens surface of the first condenser lens disposed in the optical path of the first color light, the focus position of the second color light formed by the illumination optical device can be moved to the downstream of the optical path or the focus position of the first color light formed by the illumination optical device can be moved to the upstream of the optical path, so that optical lengths of the first color light and the second color light from the illumination optical device to the respective focus positions can be substantially identical. Consequently difference in size between the first illumination area and the second illumination area can be set to minimum. Thus, only by changing shapes of the condenser lenses respectively disposed on the upstream of the optical paths of the optical modulators in the related art arrangement, the object of the present invention can be achieved. Therefore, an additional component does not have to be provided to the related art optical system, which does not affect size reduction and weight reduction of the projector.

The projector according to the exemplary aspect of the present invention, it is preferable that: the second color light has a wavelength range shorter than a wavelength range of the first color light; first, second and third condenser lenses are respectively disposed on the upstream of the first through third optical modulators; the chromatic-aberration correcting optical element includes a first convex lens disposed on the upstream of the first condenser lens in the optical path of the first color light and a second convex lens disposed on the upstream of the second condenser lens in the optical path of the second color light; and the curvature radius of a lens surface of the second convex lens is formed to be greater than the curvature radius of a lens surface of the first convex lens.
In the exemplary aspect of the present invention, only by respectively disposing the first and second convex lenses on the upstream of the optical path of the first and second condenser lenses and by forming the lens surface of the second convex lens disposed in the optical path of the second color light having the wavelength range shorter than that of the first color light so that the curvature radius thereof is greater than that of the lens surface of the first convex lens, for instance, the focus positions of the first and second color lights formed by the illumination optical device can be respectively moved to the upstream of the optical paths, so that the optical lengths of the first and second color lights from the illumination optical device to the respective focus positions can be substantially identical. Consequently, difference in size between the first illumination area and the second illumination area can be set to minimum. Thus, the object of the present invention can be achieved only by adding the first and second convex lenses to the related art arrangement, so that design of components of the related art optical system does not have to be changed.

The projector according to an exemplary aspect of the present invention, it is preferable that: the second color light has a wavelength range longer than a wavelength range of the first color light; and the chromatic-aberration correcting optical element is constituted with a convex lens or a concave mirror, which is disposed only on the optical path of the second color light.
In the exemplary aspect of the present invention, only by disposing the convex lens or the concave mirror on the optical path of the second color light having the wavelength range longer than that of the first color light, for instance, the focus position of the second color light formed by the illumination optical device can be moved to the upstream of the optical path, so that the optical lengths of the first color light and the second color light from the illumination optical device to the respective focus positions can be substantially identical. With the arrangement, difference in size between the first illumination area and the second illumination area can be set to minimum. For instance, in an arrangement employing the convex lens as the chromatic-aberration correcting optical element, the object of the present invention can be achieved only by adding the convex lens to the related art arrangement, so that design of components of the related art optical system does not have to be changed. On the other hand, for instance, in an arrangement employing the concave mirror as the chromatic-aberration correcting optical element, if the reflection mirror that guides the second color light to the second optical modulator in the related art arrangement is replaced with the concave mirror, the object of the present invention can be achieved. Therefore, an additional component does not have to be provided to the related art optical system, which does not affect size reduction and weight reduction of the projector.

A projector according to another aspect of the present invention includes: an illumination optical device having an integrator illumination optical system for irradiating an illumination light beam; a color-separating optical device for separating the light beam irradiated by the illumination optical device into first, second and third color lights; first, second and third optical modulators for modulating the first through third color lights separated by the color-separating optical device in accordance with image information; a color-combining optical device for combining the color lights modulated by the first through third optical modulators to form an optical image; and a projection optical device for projecting the optical image formed by the color-combining optical device in an enlarged manner. Geometric lengths of the respective optical paths from the illumination optical device to the first through third optical modulators are set to be identical with each other. A chromatic-aberration correcting optical element is disposed in at least one of the optical path of the first color light isolated from the other color lights to reach the first optical modulator, the optical path of the second color light isolated from the other color lights to reach the second optical modulator, and the optical path of the third color light isolated from the other color lights to reach the third optical modulator, the chromatic-aberration correcting optical element correcting chromatic aberration of at least two of the first through third color lights so that difference in size of the respective illumination areas on the first through third optical modulators is minimized.

Instead of the arrangement having the superposing lens, the illumination optical device may employ an arrangement having a first lens array and a second lens array, in which the second lens array also serves as a superposing lens.
As the integrator illumination system, an arrangement having, for instance, an integrator rod such as columnar glass rod and hollow glass rod and a relay lens may be employed instead of the arrangement having the first lens array, the second lens array and the superposing lens.
In the exemplary aspect of the present invention, the geometric lengths of the respective optical paths from the illumination optical device to the respective optical modulators are set to be identical, and the chromatic-aberration correcting optical element is disposed in at least any one of the optical paths of the first through third color lights. Since the chromatic-aberration correcting optical element can move the focus position of at least one of the first through third color lights formed by the illumination optical device to allow the optical lengths of at least two of the first through third color lights from the illumination optical device to the respective focus positions to be identical with each other, difference in size between the respective illumination areas having the uniform illuminance of at least two of the first through third color lights illuminating the respective optical modulators can be minimized. Thus, difference of the illumination margins between the at least two color lights can be set to minimum, so that the unused light areas which are not used in the optical modulators can be reduced. Therefore, as compared to the related-art arrangement without the chromatic-aberration correcting optical element, the light efficiency of the light beam irradiated from the light source can be enhanced. Further, with the enhanced light efficiency, an optical image enlarged and projected by the projection optical device can be projected clearly.

Preferably, the projector according to an exemplary aspect of the present invention, it is preferable that: the first color light has a wavelength range longer than wavelength ranges of the second and third color lights; and the chromatic-aberration correcting optical element is constituted with a concave lens or a convex mirror, which is disposed in at least one of the optical path of the second color light and the optical path of the third color light.
In the exemplary aspect of the present invention, only by disposing the concave lens or the convex mirror on at least one of the optical path of the second color light and the third color light each having the wavelength range shorter than the first color light, for instance, the focus position of at least one of the second and third color lights formed by the illumination optical device can be moved to the downstream of the optical path, so that the optical lengths of at least two of the first through third color lights from the illumination optical device to the respective focus positions can be substantially identical. Consequently, difference in size between the respective illumination areas having the uniform illuminance of at least two of the first through third color lights illuminating the respective optical modulators can be minimized. For instance, in an arrangement employing the concave lens as the chromatic-aberration correcting optical element, the object of the present invention can be achieved only by adding the concave lens to the related art arrangement, so that design of components of the related art optical system does not have to be changed. On the other hand, for instance, in an arrangement employing the convex mirror as the chromatic-aberration correcting optical element, if the reflection mirror that guides at least one of the second and third color lights to the optical modulator in the related art arrangement is replaced with the convex mirror, the object of the present invention can be achieved. Therefore, an additional component does not have to be provided to the related art optical system, which does not affect size reduction and weight reduction of the projector.

The projector according to an exemplary aspect of the present invention, it is preferable that: the first color light has a wavelength range shorter than wavelength ranges of the second and third color lights; and the chromatic-aberration correcting optical element is constituted with a convex lens or a concave mirror, which is disposed in at least one of the optical path of the second color light or the optical path of the third color light.
In the exemplary aspect of the present invention, only by disposing the convex lens or the concave mirror on at least one of the optical paths of the second and the third color lights each having the wavelength range longer than that of the first color light, for instance, the focus position of at least one of the second and third color lights formed by the illumination optical device can be moved to the upstream of the optical path, so that the optical lengths of at least two of the first through third color lights from the illumination optical device to the respective focus positions can be substantially identical. Accordingly, difference in size between the respective illumination areas having the uniform illuminance of the at least two of the first through third color lights illuminating the respective optical modulators can be minimized. For instance, in an arrangement employing the convex lens as the chromatic-aberration correcting optical element, the object of the present invention can be achieved only by adding the convex lens to the related art arrangement, so that design of components of the related art optical system does not have to be changed. On the other hand, for instance, in an arrangement employing the concave mirror as the chromatic-aberration correcting optical element, if the reflection mirror that guides at least one of the second and third color lights to the optical modulator in the related art arrangement is replaced with the concave mirror, the object of the present invention can be achieved. Therefore, an additional component does not have to be provided to the related art optical system, which does not affect size reduction and weight reduction of the projector.

The projector according to an exemplary aspect of the present invention, it is preferable that: the second color light has a wavelength range shorter than a wavelength range of the first color light; the third color light has a wavelength range longer than a wavelength range of the first color light; the chromatic-aberratiori correcting optical element is disposed in at least one of the optical path of the second color light and the optical path of the third color light; the chromatic-aberration correcting optical element disposed in the optical path of the second color light is constituted with a concave lens or a convex mirror; and the chromatic-aberration correcting optical element disposed in the optical path of the third color light is a convex lens or a concave mirror.
In the exemplary aspect of the present invention, only by disposing the concave lens or the convex mirror on the optical path of the second color light having the wavelength range shorter than that of the first color light or by disposing the convex lens or the concave mirror on the optical path of the third color light having the wavelength range longer than that of the first color light, for instance, the optical lengths of at least two of the first through third color lights from the illumination optical device to the respective focus positions can be substantially identical. Accordingly, difference in size between the respective illumination areas having the uniform illuminance of the at least two of the first through third color lights illuminating the respective optical modulators can be minimized. For instance, in an arrangement employing the concave lens or the convex lens as the chromatic-aberration correcting optical element, the object of the present invention can be achieved only by adding the concave lens or the convex lens to the related art arrangement, so that design of components of the related art optical system does not have to be changed. On the other hand, for instance, in an arrangement employing the convex mirror or the concave mirror as the chromatic-aberration correcting optical element, if the reflection mirror that guides at least one of the second and third color lights to the optical modulator in the related art arrangement is replaced with the convex mirror or the concave mirror, the object of the present invention can be achieved. Therefore, an additional component does not have to be provided to the related art optical system, which does not affect size reduction and weight reduction of the projector.

The projector according to an exemplary aspect of the present invention, it is preferable that: the first color light has a wavelength range longer than wavelength ranges of the second and third color lights; first, second and third condenser lenses are respectively disposed on the upstream of the first through third optical modulators; the chromatic-aberration correcting optical element is constituted with at least one of the second and the third condenser lenses; and the curvature radius of a lens surface of the condenser lens constituting the chromatic-aberration correcting optical element is formed to be greater than the curvature radius of a lens surface of the first condenser lens.
In the exemplary aspect of the present invention, in the condenser lenses respectively disposed on the upstream of the optical paths of the optical modulators, only by forming the lens surface of the condenser lens disposed in at least one of the optical paths of the second and third color lights each having the wavelength range shorter than that of the first color light so that the curvature radius thereof is greater than that of the lens surface of the first condenser lens disposed in the optical path of the first color light, for instance, the focus position of at least one of the second and third color lights formed by the illumination optical device can be moved to the downstream of the optical path or the focus position of the first color light formed by the illumination optical device can be moved to the upstream of the optical path, so that optical lengths of at least two of the first through third color lights from the illumination optical device to the respective focus positions can be substantially identical. Consequently, difference in size between the respective illumination areas having the uniform illuminance of the at least two of the first through third color lights illuminating the respective optical modulators can be minimized. Thus, only by changing shapes of the condenser lenses respectively disposed on the upstream of the optical paths of the optical modulators in the related art arrangement, the object of the present invention can be achieved. Therefore, an additional component does not have to be provided to the related art optical system, which does not affect size reduction and weight reduction of the projector.

The projector according to an exemplary aspect of the present invention, it is preferable that the first color light has a wavelength range shorter than wavelength ranges of the second and third color lights; and first, second and third condenser lenses are respectively disposed on the upstream of the first through third optical modulators; the chromatic-aberration correcting optical element is constituted with at least one of the second and the third condenser lenses; and the curvature radius of a lens surface of the condenser lens constituting the chromatic-aberration correcting optical element is formed to be smaller than the curvature radius of a lens surface of the first condenser lens.
In the exemplary aspect of the present invention, in the condenser lenses respectively disposed on the upstream of the optical paths of the optical modulators, only by forming the lens surface of the condenser lens disposed in at least one of the optical paths of the second and third color lights each having the wavelength range longer than that of the first color light so that the curvature radius thereof is smaller than that of the lens surface of the first condenser lens disposed in the optical path of the first color light, for instance, the focus position of at least one of the second and third color lights formed by the illumination optical device can be moved to the upstream of the optical path or the focus position of the first color light formed by the illumination optical device can be moved to the downstream of the optical path, so that optical lengths of at least two of the first through the third color lights from the illumination optical device to the respective focus positions can be substantially identical. Accordingly, difference in size between the respective illumination areas having the uniform illuminance of at least two of the first through third color lights illuminating the respective optical modulators can be minimized. Thus, only by changing shapes of the condenser lenses respectively disposed on the upstream of the optical path of the optical modulators in the related art arrangement, the object of the present invention can be achieved. Therefore, an additional component does not have to be provided to the related art optical system, which does not affect size reduction and weight reduction of the projector.

The projector according to an exemplary aspect of the present invention, it is preferable that: the second color light has a wavelength range shorter than a wavelength range of the first color light; the third color light has a wavelength range longer than a wavelength range of the first color light; first, second and third condenser lenses are respectively disposed on the upstream of the first through third optical modulators; the chromatic-aberration correcting optical element is constituted with at least one of the second and the third condenser lenses; when the second condenser lens constitutes the chromatic-aberration correcting optical element, the curvature radius of a lens surface of the second condenser lens is formed to be greater than the curvature radius of a lens surface of the first condenser lens; and when the third condenser lens constitutes the chromatic-aberration correcting optical element, the curvature radius of a lens surface of the third condenser lens is formed to be smaller than the curvature radius of a lens surface of the first condenser lens.
In the exemplary aspect of the present invention, in the condenser lenses respectively disposed on the upstream of the optical paths of the optical modulators, only by forming the lens surface of the condenser lens disposed in the optical path of the second color light having the wavelength range shorter than that of the first color light so that the curvature radius thereof is greater than that of the lens surface of the first condenser lens disposed in the optical path of the first color light, or by forming the lens surface of the condenser lens disposed in the optical path of the third color light having the wavelength range longer than that of the first color light so that the curvature radius thereof is smaller than that of the lens surface of the first condenser lens, for instance, the optical lengths of at least two of the first through third color lights from the illumination optical device to the respective focus positions can be substantially identical. Consequently, difference in size between the respective illumination areas having the uniform illuminance of at least two of the first through third color lights illuminating the respective optical modulators can be minimized. Thus, only by changing shapes of the condenser lenses respectively disposed on the upstream of the optical path of the optical modulators in the related art arrangement, the object of the present invention can be achieved. Therefore, an additional component does not have to be provided to the related art optical system, which does not affect size reduction and weight reduction of the projector.

The projector according to an aspect of the present invention, it is preferable that: the second color light has a wavelength range shorter than a wavelength range of the first color light; first, second and third condenser lenses are respectively disposed on the upstream of the first through third optical modulators; the chromatic-aberration correcting optical element includes a first convex lens disposed on the upstream of the first condenser lens in the optical path of the first color light and a second convex lens disposed on the upstream of the second condenser lens in the optical path of the second color light; and the curvature radius of a lens surface of the second convex lens is formed to be greater than the curvature radius of a lens surface of the first convex lens.
In the exemplary aspect of the present invention, only by respectively disposing the first and second convex lenses on the upstream of the first and second condenser lenses and by forming the lens surface of the second convex lens disposed in the optical path of the second color light having the wavelength range shorter than that of the first color light so that the curvature radius thereof is greater than that of the lens surface of the first convex lens, for instance, the focus positions of the first and second color lights formed by the illumination optical device can be moved to the upstream of the optical path, so that the optical lengths of at least two of the first through third color lights from the illumination optical device to the respective focus positions can be substantially identical. Consequently, difference in size between the respective illumination areas having the uniform illuminance of at least two of the first through third color lights illuminating the respective optical modulators can be minimized. Thus, the object of the present invention can be achieved only by adding the first and second convex lenses to the related art arrangement, so that design of components of the related art optical system does not have to be changed.

The projector according to an aspect of the present invention, it is preferable that: the second color light has a wavelength range shorter than a wavelength range of the first color light; the third color light has a wavelength range shorter than a wavelength range of the second color light; first, second and third condenser lenses are respectively disposed on the upstream of the first through third optical modulators; the chromatic-aberration correcting optical element includes a first convex lens disposed on the upstream of the first condenser lens in the optical path of the first color light, a second convex lens disposed on the upstream of the second condenser lens in the optical path of the second color light and a third convex lens disposed on the upstream of the third condenser lens in the optical path of the third color light; the curvature radius of a lens surface of the second convex lens is formed to be greater than the curvature radius of a lens surface of the first convex lens; and the curvature radius of a lens surface of the third convex lens is formed to be greater than the curvature radius of a lens surface of the second convex lens.
In the exemplary aspect of the present invention, only by respectively disposing the first through third convex lenses on the upstream of the optical path of the first through third condenser lenses, forming the lens surface of the second convex lens disposed in the optical path of the second color light having the wavelength range shorter than that of the first color light so that the curvature radius thereof is greater than that of the lens surface of the first convex lens, and by forming the lens surface of the third convex lens disposed in the optical path of the third color light having the wavelength range shorter than that of the second color light so that the curvature radius thereof is greater than that of the lens surface of the second convex lens, for instance, the focus positions of the first through third color lights formed by the illumination optical device can be respectively moved to the upstream of the optical paths, so that the optical lengths of at least two of the first through third color lights from the illumination optical device to the respective focus positions can be substantially identical. Accordingly, difference in size between the respective illumination areas having the uniform illuminance of at least two of the first through third color lights illuminating the respective optical modulators can be minimized. Thus, the object of the present invention can be achieved only by adding the first through third convex lenses to the related art arrangement, so that design of components of the related art optical system does not have to be changed.

### [BRIEF DESCRIPTION OF THE DRAWINGS]

Fig. 1 is a schematic plan view showing a projector according to a first exemplary embodiment;
Fig. 2 is a schematic illustration showing a focus position of blue light without a concave lens disposed in the optical path and a focus position of green light according to the exemplary embodiment;
Fig. 3 is a schematic illustration showing an illumination area having a uniform illuminance of the blue light without a concave lens disposed in the optical path and an illumination area having a uniform illuminance of the green light according to the exemplary embodiment;
Fig. 4 is a schematic illustration showing a situation where a concave lens is disposed in the optical path of the blue light so that a focus position of the blue light is adjusted to a focus position of the green light according to the exemplary embodiment;
Fig. 5 is a schematic illustration showing an illumination area having a uniform illuminance of the blue light when a concave lens is disposed in the optical path of the blue light and an illumination area having a uniform illuminance of the green light according to the exemplary embodiment;
Fig. 6 is a schematic plan view showing a projector according to a second exemplary embodiment;
Fig. 7 is a schematic plan view showing a projector according to a third exemplary embodiment;
Fig. 8 is a schematic illustration showing comparison of the curvature radii of field lenses of green light and blue light when using the first lens array, the second lens array, superposing lens, filed lenses and liquid crystal panel according to the exemplary embodiment;
Fig. 9 is a schematic plan view showing a projector according to a fourth exemplary embodiment;
Fig 10 is a schematic illustration showing a situation where a convex lens is disposed in the optical path of the green light so that a focus position of the green light is adjusted to a focus position of the blue light according to the exemplary embodiment;
Fig. 11 is a schematic plan view showing a projector according to a fifth exemplary embodiment;
Fig. 12 is a schematic illustration showing comparison of the curvature radii of field lenses of green light and blue light when using the first lens array, the second lens array, superposing lens, filed lenses and liquid crystal panel according to the exemplary embodiment;
Fig. 13 is a schematic plan view showing a projector according to a sixth exemplary embodiment;
Fig. 14 is a schematic plan view showing a projector according to a seventh exemplary embodiment; and
Fig. 15 is a schematic plan view showing a projector according to an eighth exemplary embodiment;

### [EXPLANATION OF CODES]

1, 1A, 1B, 1C, 1D, 1E, 1F, 1G: projector
3, 3A, 3B, 3C, 3D, 3E, 3F, 3G: optical device
4: projection lens (projection optical device)
10: light source device
20, 20C, 20F, 20G: illumination optical device
30: color-separating optical device
33': convex mirror (chromatic-aberration correcting optical element)
41R, 41G, 41B: field lens (condenser lens)
41B' : field lens (condenser lens, chromatic-aberration correcting optical element)
41G': field lens (condenser lens, chromatic-aberration correcting optical element)
42, 42R, 42G, 42B: liquid crystal panel (optical modulator)
45: cross dichroic prism (color-combining optical device)
50, 50D: concave lens (chromatic-aberration correcting optical element)
50C, 52, 53, 54, 55: convex lens (chromatic-aberration correcting optical element)
LB, LG: lens surface

### [BEST MODE FOR CARRYING OUT THE INVENTION]

### [First Exemplary Embodiment]

A first exemplary embodiment of the present invention will be described below with reference to the attached drawings.

### [Arrangement of Projector]

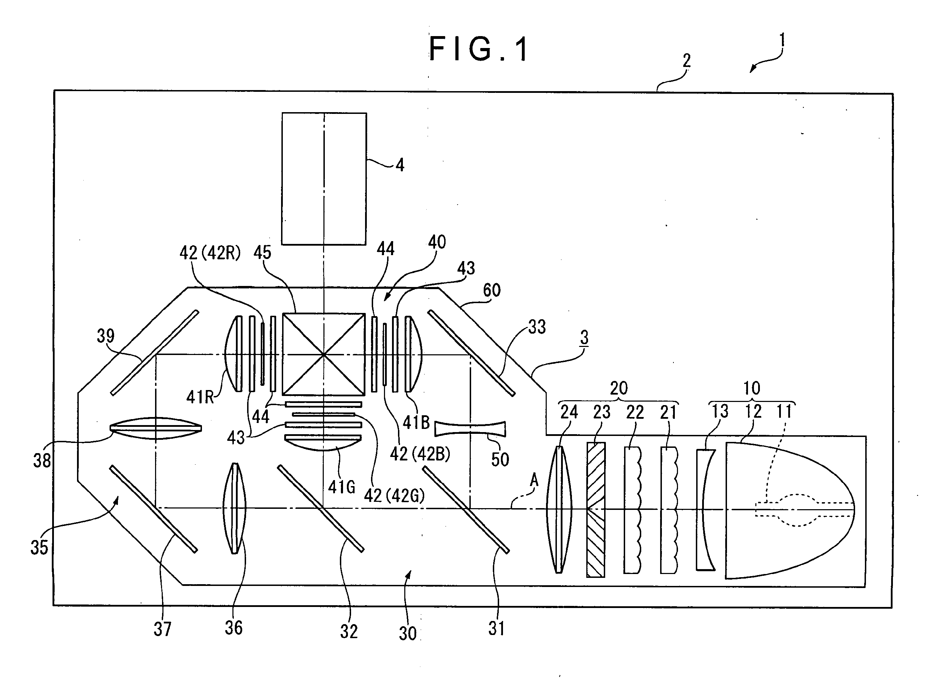

The projector 1 modulates a light beam irradiated from a light source in accordance with image information to form an optical image, and projects the :optical image on a screen in an enlarged manner. As shown in Fig. 1, the projector 1 includes an exterior case 2, an optical device 3, and a projection lens 4 as a projection optical device.
Although not shown in Fig.1, a cooling unit for cooling inside of the projector 1, a power source unit for supplying electric power to each of components in the projector 1, a control board for controlling drives of the optical device 3 and the cooling unit, etc., and the like are disposed in a space not occupied by the optical device 3 and the projection lens 4 in the exterior case 2.

The exterior case 2 is made of synthetic resin or the like, and formed in a substantially parallelepiped profile with the optical device 3 and the projection lens 4 housed and arranged therein. The exterior case 2, although not shown, is formed with an upper case constituting a top side, a front side, a rear side and lateral sides of the projector 1 and a lower case constituting a bottom side, a front side, lateral sides and a rear side of the projector 1. The upper case and the lower case are fixed to each other with screws or the like.
The exterior case 2 may not necessarily be made of synthetic resin, but other materials such as metals may be used.

The optical device 3 optically processes the light beam irradiated from the light source to form an optical image (color image) in accordance with the image information. As shown in Fig. 1, the optical device 3 has a substantially L-shape in plan view, extending along the rear side and along the lateral side of the exterior case 2. Incidentally, the detailed arrangement of the optical device 3 will be described below.
The projection lens 4 is a lens set of combined plural lenses. The projection lens 4 projects the optical image (color image) formed by the optical device 3 on a screen (not shown) in an enlarged manner.

### [Arrangement of Optical Device]

As shown in Fig. 1, the optical device 3 includes a light source device: 10, an illumination optical device 20, a color-separating optical device 30, a relay optical system 35, an electrooptic device 40 and a concave lens 50 as a chromatic-aberration correcting optical element. Optical element including the illumination optical device 20, the color-separating optical device 30 and the relay optical system 35 are positioned and housed in an optical component casing 60 in which a predetermined optical axis A is set.

The light source device 10 irradiates the light beam irradiated from a light source lamp after aligning in a predetermine direction and illuminates the electrooptic device 40. As shown in Fig. 1, the light source device 10 includes a light source lamp 11, an ellipsoidal reflector 12, and a parallelizing concave lens 13. The light beam irradiated from the light source lamp 11 is irradiated toward the front side of the device by the ellipsoidal reflector 12 as a convergent light. The convergent light is then parallelized by the parallelizing concave lens 13 to be irradiated on the illumination optical device 20. As the light source lamp 11, halogen lamp, metal halide lamp and high-pressure mercury lamp are often used. In place of the ellipsoidal reflector 12 and the parallelizing concave lens 13, a parabolic mirror may be used.

The illumination optical device 20 focuses the light beam irradiated from the light source device 10 on an image formation area of a later-described liquid crystal panel of the electrooptic device 40. As shown in Fig. 1, the illumination optical device 20 has a first lens array 21, a second lens array 22, a polarization converter 23 and a superposing lens 24.
The first lens array 21 for splitting the light beam irradiated from the light source lamp 11 into a plurality of sub-beams includes a plurality of small lenses arranged in a matrix in a plane orthogonal to an illumination optical axis A.
The second lens array 22 is an optical element for condensing the plurality of sub-beams split by the first lens array 21 and is provided with a plurality of small lenses arranged in a matrix in a plane orthogonal to the illumination optical axis A in the same manner as the first lens array 21. However, since the purpose of the second lens array 22 is to condense the light beams, the profile of the respective small lenses thereof does not have to correspond to the profile of the image formation area of a later-described liquid crystal panel of the electrooptic device 40.

The polarization converter 23 aligns the polarization direction of the respective sub-beams split by the first lens array 21 into linear polarization in substantially one direction.
Although not shown, the polarization converter 23 has an arrangement in which polarization separating films and reflection mirrors inclined relative to the illumination optical axis A are alternately arranged. The polarization separating film transmits either one of P polarized light beam or S polarized light beam contained in the respective sub-beams and reflects the other one of the polarized light beams. The reflected polarized light beam is bent by the reflection mirror and is irradiated in the irradiation direction of the transmitted polarized light beam, i.e. along the illumination optical axis A. Either one of the irradiated polarized light beams is polarization-converted by a phase plate provided on the light-irradiation surface of the polarization converter 23 so that the polarization direction of all of the polarized light beams are aligned. With the use of the polarization converter 23, the light beam irradiated from the light source lamp 11 can be aligned as a polarized light beam in substantially one direction, thereby enhancing the utilization ratio of the light source beam used in the electrooptic device 40.
The superposing lens 24 is an optical element for condensing the plurality of sub-beams that have passed through the first lens array 21, the second lens array 22 and the polarization converter 23 to superpose the sub-beams on an image formation area of the later-described liquid crystal panel of the electrooptic device 40.
As described above, although the light beam having nonuniform illuminance is irradiated from the light source device 10 in a plane orthogonal to the illumination optical axis A, the illumination area can be illuminated with the uniform illuminance using the integrator illumination system including the first lens array 21, the second lens array 22 and the superposing lens 24.

The color-separating optical device 30 includes two dichroic mirrors 31 and 32 and a reflection mirror 33, the dichroic mirrors 31 and 32 separating the plurality of sub-beams irradiated from the illumination optical device 20 into three color lights: red light having red wavelength range (e.g. approximately 580-750 nm); green light having green wavelength range (e.g. approximately 500-580 nm); and blue light having blue wavelength range (e.g. approximately 400-500 nm).
The dichroic mirrors 31 and 32 are optical elements having a base on which a wavelength-selection film that reflects a light beam of a predetermined wavelength and transmits a light beam of the other wavelength is formed. The dichroic mirror 31 disposed on the upstream of the optical path is a mirror that reflects the blue light and transmits the other color lights. The dichroic mirror 32 disposed on the downstream of the optical path is a mirror that reflects the green light and transmits the red light.

The relay optical system 35 includes an incident-side lens 36, a relay lens 38 and reflection mirrors 37 and 39, and guides the red light transmitted through the dichroic mirror 32 of the color-separating optical device 30 to the electrooptic device 40. Incidentally, the relay optical system 35 is used for the optical path of the red light in order to avoid deterioration in the light utilization efficiency on account of light dispersion and the like caused by the longer geometric length of the optical path of the red light than the optical path of the other color lights. Though such arrangement is used in the present exemplary embodiment because of the geometrically longer optical path of the red light, the optical path of the blue light may alternatively be geometrically lengthened.

The blue light separated by the above-described dichroic mirror 31 is bent by the reflection mirror 33, which is then fed to the electrooptic device 40 through a field lens 41 B as a condenser lens. The green light separated by the dichroic mirror 32 is directly fed to the electrooptic device 40 through a field lens 41 G as a condenser lens. The red light is condensed and bent by the lenses 36, 38 and the reflection mirrors 37 and 39 of the relay optical system 35 to be fed to the electrooptic device 40 through a field lens 41 R as a condenser lens. Incidentally, the field lenses 41 R, 41 G and 4 1 B provided on the upstream of the respective color lights of the electrooptic device 40 convert the respective sub-beams irradiated by the second lens array 22 into a light beam substantially parallel to the illumination optical axis A.

The electrooptic device 40 modulates the incident light beam in accordance with the image information to form a color image. The electrooptic device 40 includes three liquid crystal panels 42 as optical modulators (42R for red light, 42G for green light and 42B for blue light), incident-side polarization plates 43 and irradiation-side polarization plates 44 respectively disposed on the upstream and the downstream of the liquid crystal panels 42, and a cross dichroic prism 45 as a color-combining optical device.
The respective color lights with their polarization direction aligned in substantially uniform direction by the polarization converter 23 are incident on the incident-side polarization plates 43, which only transmit the polarized light having substantially the same direction as the polarization axis of the light beam aligned by the polarization converter 23 and absorb the other incident light beams among incident light beams. The incident-side polarization plate 43 has a light transmissive substrate made of sapphire glass, quarts crystal or the like on which a polarization film is attached.

Although not shown in detail, the liquid crystal panel 42 uses a pair of glass substrates with a liquid crystal as an electrooptic material sealed therebetween, in which orientation of the liquid crystal located in a display area is controlled in accordance with a control signal output from a control board (not shown) to modulate the polarization direction of the polarized light beam irradiated from the incident-side polarization plate 43.
The irradiation-side polarization plate 44 is arranged generally in the same manner as the incident-side polarization plates 43, which transmits the light beam having polarization axis orthogonal to a transmissive axis of the light beam in the incident-side polarization plates 43 among the light beam irradiated from the display area of the liquid crystal panel 42 and absorbs the other light beam.
The cross dichroic prism 45 is an optical element for combining the optical images irradiated by the irradiation-side polarization plates 44 and modulated for each color light to form a color image. The cross dichroic prism 45 has a substantially square shape in plane view with four right-angle prisms attached with each other, and two dielectric multi-layered films are formed on the boundaries adhering the respective right-angle prisms. The dielectric multi-layered films reflect the respective color lights irradiated from the liquid crystal panels 42R and 42B and transmitted through the irradiation-side polarization plates 44, and transmit the color light irradiated from the liquid crystal panel 42G and transmitted through the irradiation-side polarization plate 44. The respective color lights modulated by the respective liquid crystal panels 42R, 42G and 42B are combined to form the color image.

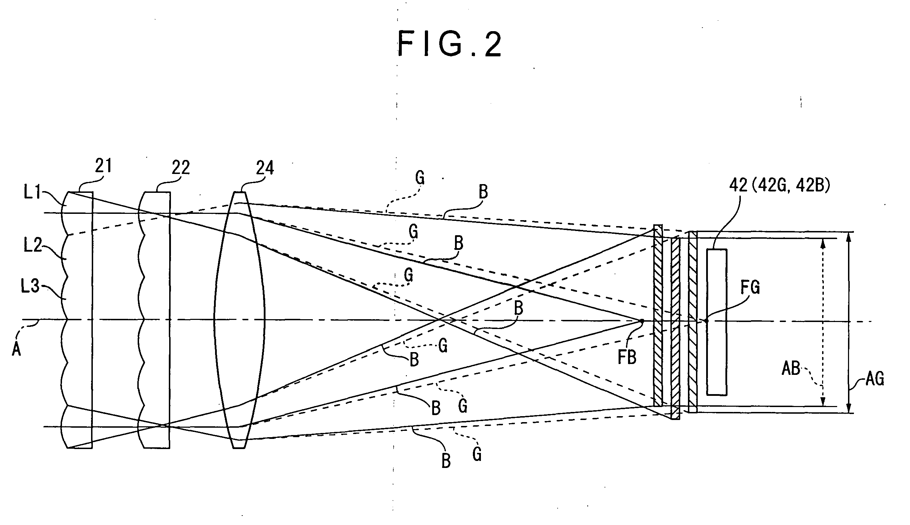

The concave lens 50 is disposed between the dichroic mirror 31 and the reflection mirror 33 on the optical path of the blue light to move the focus position of the blue light to the downstream of the optical path.
The geometric length of the optical path of the blue light B from the superposing lens 24 to the liquid crystal panel 42B is set to be substantially identical with that of the green light G from the superposing lens 24 to the liquid crystal panel 42G. Fig. 2 comparably shows the blue light B and the green light G that are passed through the superposing lens 24. In Fig. 2, the dichroic mirrors 31 and 32, the reflection mirror 33, the field lenses 41 G and 41 B, and incident-side polarization plates 43 disposed between the polarization converter 23 and the superposing lens 24, and the liquid crystal panels 42 (42G and 42B) are omitted for convenience of description.
Refractive index of the superposing lens 24 varies depending on wavelength (color). For instance, the refractive index for the blue wavelength range in the superposing lens 24 is greater relative to that for the green wavelength range in the superposing lens 24. Thus, as shown in Fig. 2, a focus position FB of the blue light B is formed on the upstream of the optical path, relative to a focus position FG of the green light G. In short, an optical length from the superposing lens 24 to the focus position FB of the blue light B differs from an optical length from the superposing lens 24 to the focus position FG of the green light G.

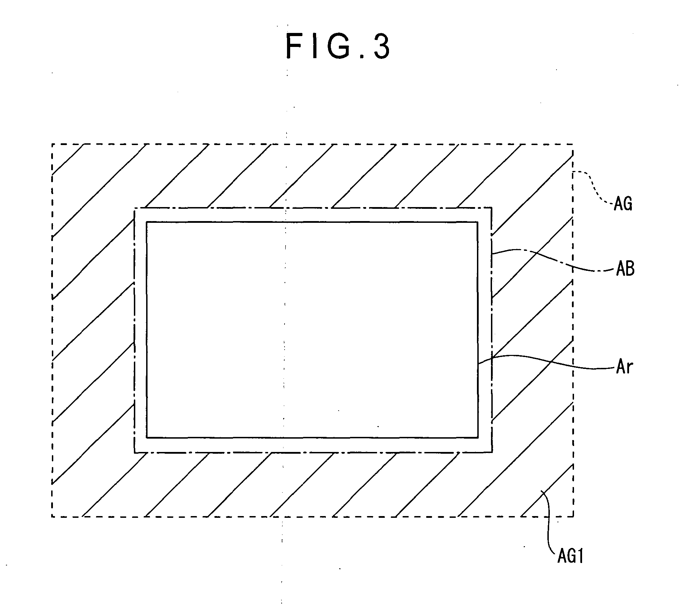

As described above, since the focus position FB of the blue light B is formed on the upstream of the optical path relative to the focus position FG of the green light G, a illumination area AB having a uniform illuminance of the blue light B is smaller than an illumination area AG having a uniform illuminance of the green light G, as shown in Fig. 3. In other words, when images of the small lenses L1, L2, L3, etc. (Fig. 2) of the first lens array 21 are superposed on the liquid crystal panel 42, the images of green light G are correspondently superposed, while the images of blue light B misalign vertically and horizontally, reducing a uniform area where the all images overlap.
Thus, in optical designing, when the illumination optical device 20 for forming the focus position FG of the green light on a position substantially coincident with the position (image formation area) of the liquid crystal panel 42 is used, the focus position FB of the blue light B needs to be changed so that the focus position FB coincides with the position of the liquid crystal panel 42B, as shown in Fig. 2. As shown in Fig. 3, if the illumination optical device is so designed as to merely move the position of the liquid crystal panel 42B to the focus position FB, the illumination area AG having the uniform illuminance of the green light G becomes larger than the uniform illumination area AB having the uniform illuminance of the blue light B. The difference between the uniform illumination area AB having the uniform illuminance of the blue light B and the illumination area AG having the uniform illuminance of the green light G forms an unused light area AG1 which is not used in the liquid crystal panel 42G.

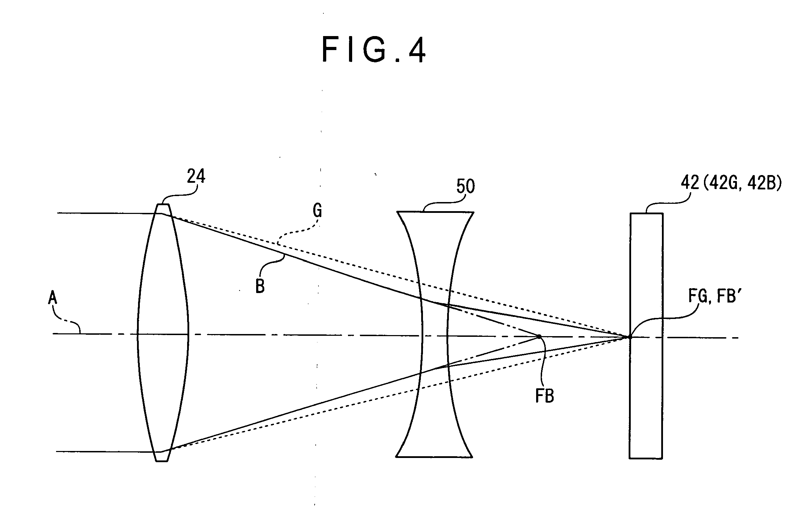

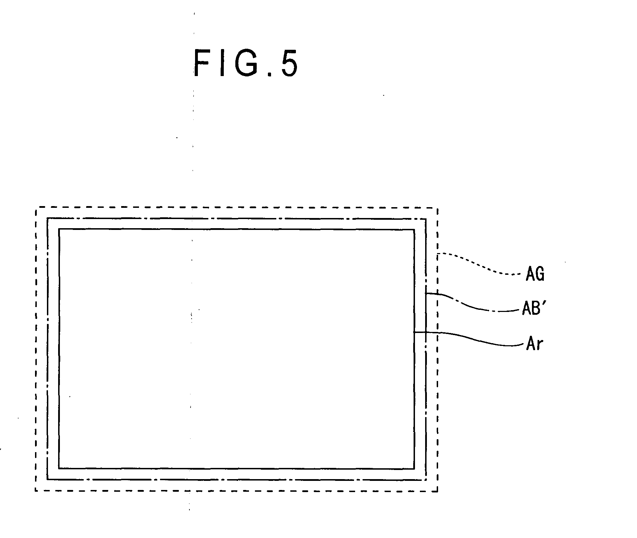

As shown in Fig. 4, when the concave lens 50 is provided on the optical path of the blue light B, the blue light B is refracted by the concave lens 50, so that the focus position of the blue light B is moved to the downstream of the optical path relative to the above-described focus position FB, which is to be indicated as a focus position FB'. Thus, the focus position FB' of the blue light B substantially coincides with the focus position FG of the green light G. In short, an optical length of the blue light B irradiated from the superposing lens 24 and refracted by the concave lens 50 to reach the focus position FB' is substantially identical with an optical length of the green light G from the superposing lens 24 to the focus position FG. The concave lens 50 is designed in accordance with the optical property of the superposing lens 24 (chromatic-aberration between green light and blue light).
By forming the focus position FB' of the blue light B and focus position FG of the green light G on a position of the liquid crystal panel 42 (42G and 42B) as shown in Fig. 4, the illumination area AB' having the uniform illuminance of the blue light and the illumination area AG having the uniform illuminance of the green light substantially coincide with an image formation area Ar of the liquid crystal panel 42 (42G and 42B) as shown in Fig. 5.
With such arrangement, since difference in size between the illumination area AB' of the blue light and the illumination area AG of the green light becomes minimum, the unused light area AG1 described above can be set to minimum.
Although not described in detail, a focus position of the red light is so set as to coincide with the position of the liquid crystal panel 42R by the relay optical system 35, so that an illumination area having a uniform illuminance of the red light can substantially coincide with the image formation area Ar of the liquid crystal panel 42.
Since the concave lens 50 is for correcting the chromatic-aberration, a lens with great curvature radius can be employed, which can be easily prepared by polishing, heat-pressing a plate grass, or using a plastic.

In the first exemplary embodiment described above, since the concave lens 50 is disposed in the optical path of the blue light B in the optical device 3, the focus position FB' of the blue light B can substantially coincide with the focus position FG of the green light G, and accordingly, difference in size between the illumination area AB' having the uniform illuminance of the blue light B and the illumination area AG having the uniform illuminance of the green light G can be set to minimum. Thus, by forming the respective focus positions FG and FB' on the position of the liquid crystal panels 42 (42G and 42B), the unused light area AG1 that is not used at the liquid crystal panels 42 can be set to minimum. Therefore, utilization efficiency of the light beam irradiated from the light source device 10 can be enhanced.
Further, since the concave lens 50 is used as the chromatic-aberration correcting optical element, in a case where the concave lens 50 is added to an optical device included in a general-purpose projector, enhancement of the light utilization efficiency as described above can be obtained. Therefore, enhancement of the light utilization efficiency can be obtained at low cost without changing designs of components used in the optical system of the general-purpose projector.
Further, since the projector 1 includes the optical device 3 capable of enhancing light utilization efficiency, a color image enlarged and projected by the projection lens 4 can be projected clearly.

### [Second Exemplary Embodiment]

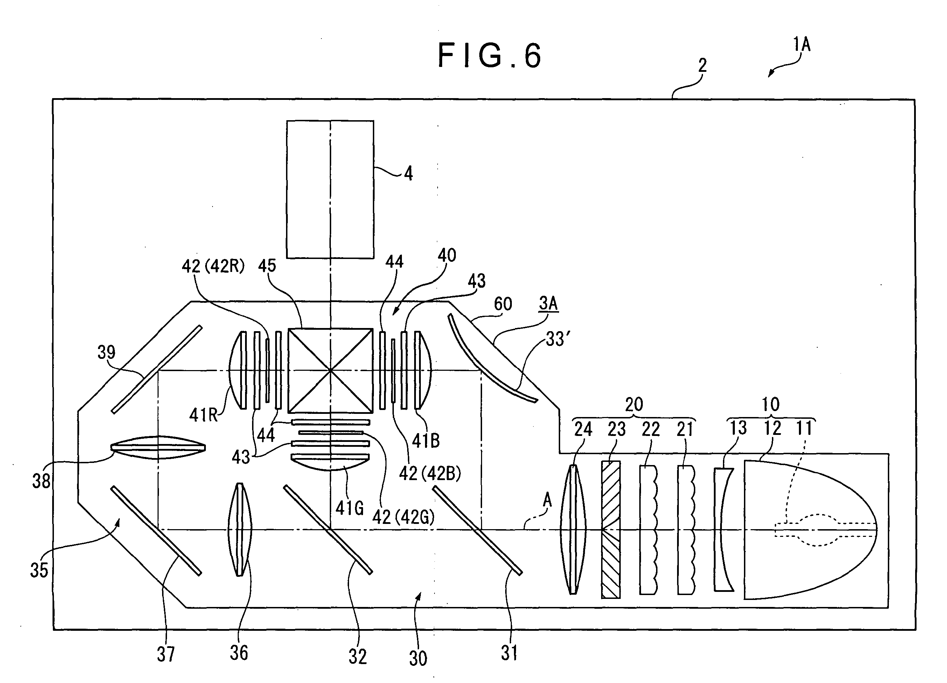

Next, a second exemplary embodiment of the present invention will be described with reference to the attached drawings.
In the following description, the same components as those in the first exemplary embodiment are indicated by the same reference symbols or numerals for omitting or simplifying the detailed description thereof.
As shown in Fig. 6, in the projector 1A of the present exemplary embodiment, the concave lens 50 described in the first exemplary embodiment is not included in the optical device 3A. Instead, the reflection mirror 33 described in the first exemplary embodiment is replaced with a convex mirror 33' as a chromatic-aberration correcting optical element. The arrangement is the same as the first exemplary embodiment except that the concave lens 50 is not provided and that the reflection mirror 33 is replaced with the convex mirror 33'.

Although not shown, the convex mirror 33' replacing the reflection mirror 33 described in the first exemplary embodiment makes the focus position of the blue light formed by the superposing lens 24 move to the downstream of the optical path, in a manner substantially same as the concave lens 50 in the first exemplary embodiment.
As with the first exemplary embodiment, by forming the focus position of the blue light at a position substantially coincident with the focus position of the green light and placing the focus positions on the position of the liquid crystal panels 42 (42G and 42B), both the illumination area having the uniform illuminance of the blue light and the illumination area having the uniform illuminance of the green light can coincide with the image formation area of the liquid crystal panels 42 (42G and 42B). The convex mirror 33' is designed in accordance with the optical property of the superposing lens 24 (chromatic-aberration between green light and blue light).

In the second exemplary embodiment described above, as compared with the first exemplary embodiment, the focus position of the blue light can be moved to the downstream of the optical path by the convex mirror 33', so that the size of the illumination area having the uniform illuminance of the blue light can substantially coincide with that of the green light. Accordingly, only by providing the convex mirror 33' instead of the reflection mirror for guiding the blue light separated by the color-separating optical device 30 to the liquid crystal panel in the related art arrangement, the light utilization efficiency can be enhanced. Therefore, an additional component such as concave lens 50 in the first exemplary embodiment does not have to be provided, which does not affect size reduction and weight reduction of the optical device 3A.

### [Third Exemplary Embodiment]

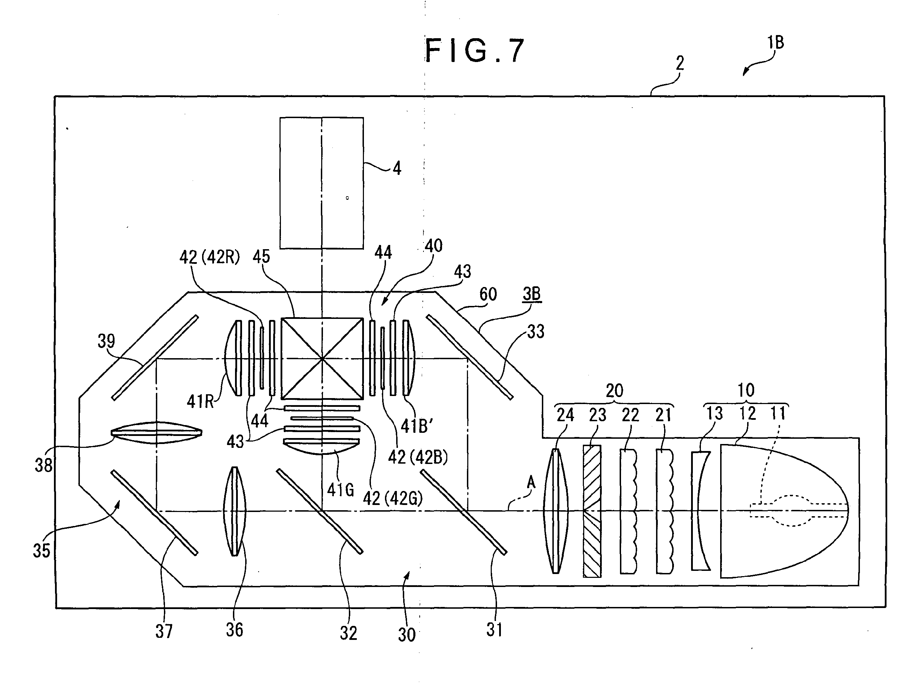

Next, a third exemplary embodiment of the present invention will be described with reference to the attached drawings.
In the following description, the same components as those in the first exemplary embodiment are indicated by the same reference symbols or numerals for omitting or simplifying the detailed description thereof.
As shown in Fig. 7, in the projector 1B of the present exemplary embodiment, the concave lens 50 described in the first exemplary embodiment is not included in an optical device 3B. Instead, the field lenses 41G and 41B' described in the first exemplary embodiment are formed such that the lens surfaces thereof have different curvature radii. The arrangement is the same as the first exemplary embodiment except that the concave lens 50 is not provided and that a field lens 41B' has a different shape.

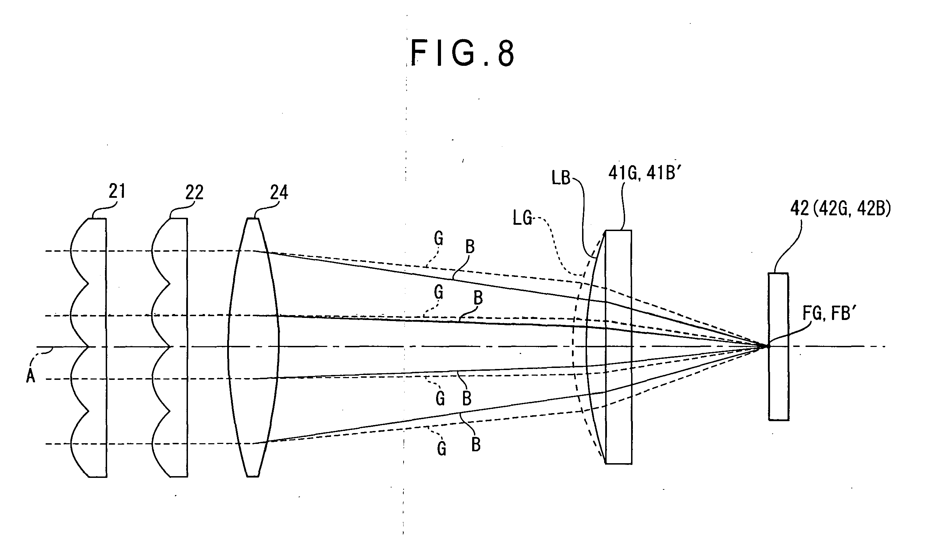

As shown in Fig. 8, a lens surface LG of the field lens 41G and a lens surface LB of the field lens 41B' as chromatic-aberration correcting optical elements have spherical shapes with the profiles different from each other.
More specifically, the curvature radius of the lens surface LB of the field lens 41B' is greater than that of the lens surface LG of the field lens 41G.
Thus, by forming the field lens 41B' to have the curvature radius of the lens surface LB greater than that of the lens surface LG of the field lens 41G, the focus position of the blue light formed by the superposing lens 24 can be moved to the downstream of the optical path in a manner substantially same as the concave lens 50 described in the first exemplary embodiment.
As with the first exemplary embodiment, by placing the focus position FB' of the blue light B at a position substantially coincident with the focus position FG of the green light G, and placing the focus positions on the position of the liquid crystal panels 42 (42G and 42B), both the illumination area having the uniform illuminance of the blue light B and the illumination area having the uniform illuminance of the green light G can substantially coincide with the image formation area of the liquid crystal panels 42 (42G and 42B). The field lens 41B' is designed in accordance with the optical property of the superposing lens 24 (chromatic-aberration between green light and blue light).

In the third exemplary embodiment described above, as compared with the first exemplary embodiment, the focus position of the blue light B can be move to the downstream of the optical path by forming the curvature radius of the lens surface LB of the field lens 41B' greater than that of the lens surface LG of the field lens 41G, so that the size of the illumination area having the uniform illuminance of the blue light B can substantially coincide with that of the green light G. Accordingly, only by changing the shapes of the respective field lenses respectively disposed on the upstream of the respective liquid crystal panels in the related art arrangement, the light utilization efficiency can be enhanced. Therefore, an additional component such as concave lens 50 in the first exemplary embodiment does not have to be provided, which does not affect size reduction and weight reduction of the optical device 3B.

### [Fourth Exemplary Embodiment]

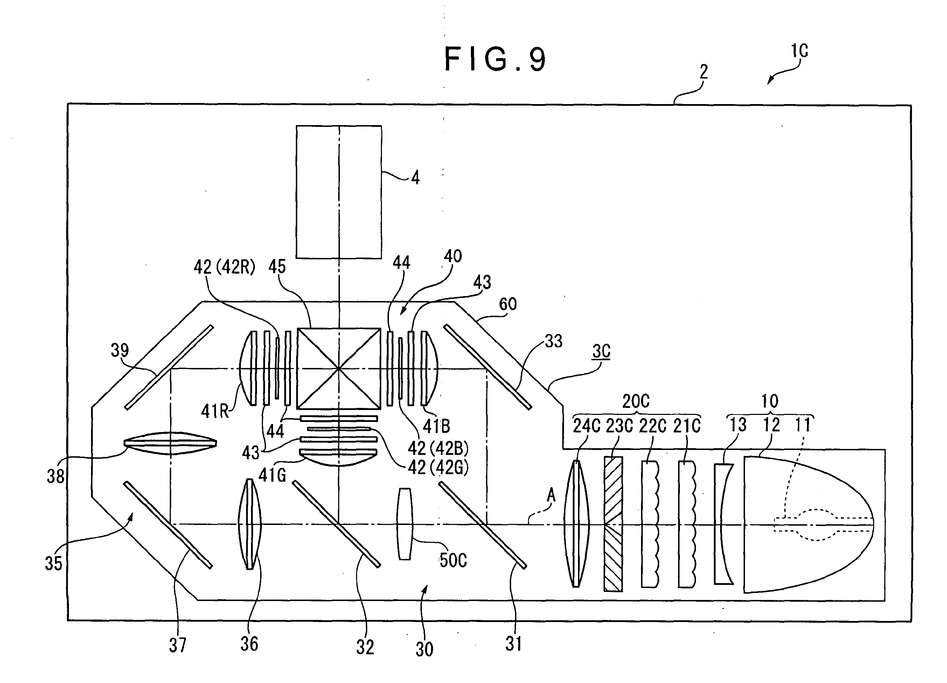

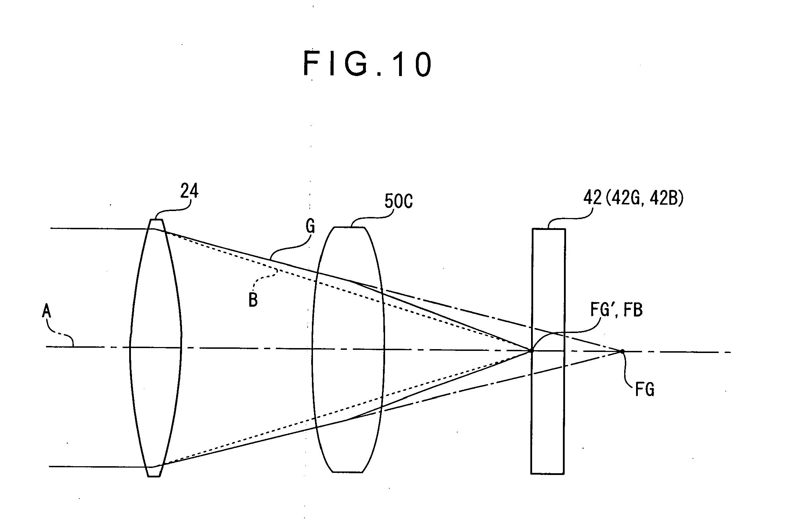

Next, a fourth exemplary embodiment of the present invention will be described with reference to the attached drawings.
In the following description, the same components as those in the first exemplary embodiment are indicated by the same reference symbols or numerals for omitting or simplifying the detailed description thereof.
As shown in Fig. 9, in a projector 1C of the present exemplary embodiment an optical device 3C includes an illumination optical device 20C for forming the focus position FB (Fig. 10) of the blue light B at a position substantially coincident with the position of the liquid crystal panel 42B (image formation area) and a convex lens 50C as the chromatic-aberration correcting optical element in place of the illumination optical device 20 and the convex lens 50 described in the first exemplary embodiment.

The illumination optical device 20C includes a first lens array 21C, a second lens array 22C, a polarization converter 23C and a superposing lens 24C, which has an arrangement similar to the illumination optical device 20 of the first exemplary embodiment except that the focus position FB of the blue light B substantially coincides with the position of the liquid crystal panel 42B (image formation area).
As with the superposing lens 24 in the first exemplary embodiment, refractive index of the superposing lens 24C varies depending on wavelength (color). Thus, the focus position FG of the green light G is formed on the downstream of the optical path relative to the focus position FB of the blue light B. In short, the optical length of the blue light B from the super posing lens 24C to the focus position FB is different from the optical length of the green light G from the superposing lens 24 to the focus position FG.

When, as shown in Fig. 10, the convex lens 50C is disposed in the optical path (between the dichroic mirrors 31 and 32) of the green light G, the green light G is refracted by the convex lens 50C, and the focus position FG of the green light G is moved to the upstream of the optical path relative to the focus position FG to be the focus position FG'. Thus, the focus position FG' of the green light G substantially coincides with the focus position FB of the blue light B. That is, the optical length of the green light G irradiated from the superposing lens 24C and refracted by the convex lens 50C to reach the focus position FG' becomes substantially identical with the optical length of the blue light B from the superposing lens 24C to the focus position FB. The convex lens 50C is designed in accordance with optical properties of the superposing lens 24C (chromatic aberration between green light and blue light).
In the present exemplary embodiment, as shown in Fig. 9, since the convex lens 50C is disposed between the dichroic mirrors 31 and 32, the focus position of the red light is also moved by the convex lens 50C, which is appropriately corrected by the relay optical system 35. Incidentally, the convex lens 50C may be disposed, for instance, between the dichroic mirror 32 and the field lens 41G without limiting to the position described above.

As shown in Fig. 10, by forming the focus position FG' of the green light G and the focus position FB of the blue light B on the position of the liquid crystal panels 42 (42G and 42B), the illumination area having the uniform illuminance of the blue light and the illumination area having the uniform illuminance of the green light substantially coincide with the image formation areas of the liquid crystal panels 42 (42G and 42B) as in the first exemplary embodiment.
With such arrangement, since the illumination area of the blue light substantially coincides with the illumination area of the green light, the above-described unused light area can be set to minimum.

In the forth exemplary embodiment described above, the focus position of the green light G can be moved to upstream of the optical path by disposing the convex lens 50C on the optical path of the green light G so that the focus position FG' of the green light G can substantially coincide with the focus position FB of the blue light B, while difference in size between the illumination area having the uniform illuminance of the green light G and the illumination area having the uniform illuminance of the blue light B can be minimized. Thus, by forming the respective focus positions FB and FG' on the position of the liquid crystal panels 42 (42G and 42B), the unused light area that is not used at the liquid crystal panels 42 can be set to minimum. Therefore, utilization efficiency of the light beam irradiated from the light source device 10 can be enhanced.
Since the convex lens 50C is used as the chromatic-aberration correcting optical element, even when the convex lens 50C is added to the optical device of the general-purpose projector having the illumination optical device for forming the focus position FB of the blue light B on the position substantially coincident with the position of the liquid crystal panel 42B (image formation area), the enhancement of the light utilization efficiency as described above can be obtained. Therefore, enhancement of the light utilization efficiency can be obtained at low cost without changing designs of components used in the optical system of the general-purpose projector.
Further, since the projector 1C includes the optical device 3C capable of enhancing light utilization efficiency, a color image enlarged and projected by the projection lens 4 can be projected clearly.

### [Fifth Exemplary Embodiment]

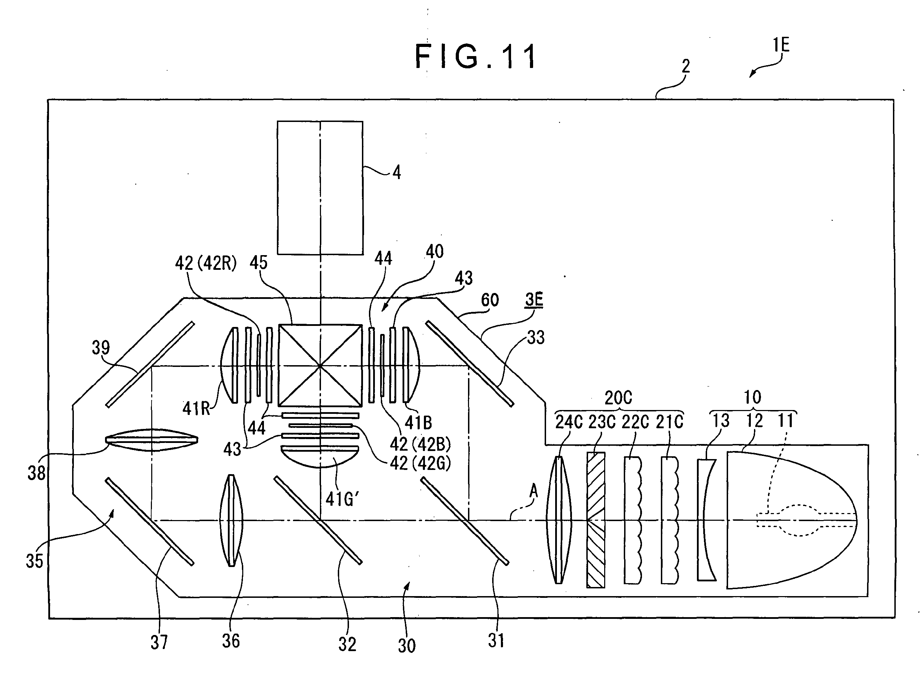

Next, a fifth exemplary embodiment of the present invention will be described with reference to the attached drawings.
In the following description, the same components as those in the fourth exemplary embodiment are indicated by the same reference symbols or numerals for omitting or simplifying the detailed description thereof.
As shown in Fig. 11, in a projector 1E of the present exemplary embodiment, an optical device 3E does not include the convex lens 50C described in the fourth exemplary embodiment. Instead, field lenses 41 G' and 41B are formed such that the lens surfaces thereof have different curvature radii. The arrangement is the same as the fourth exemplary embodiment except that the convex lens 50C is not provided and that the field lens 41 G' has a different shape.

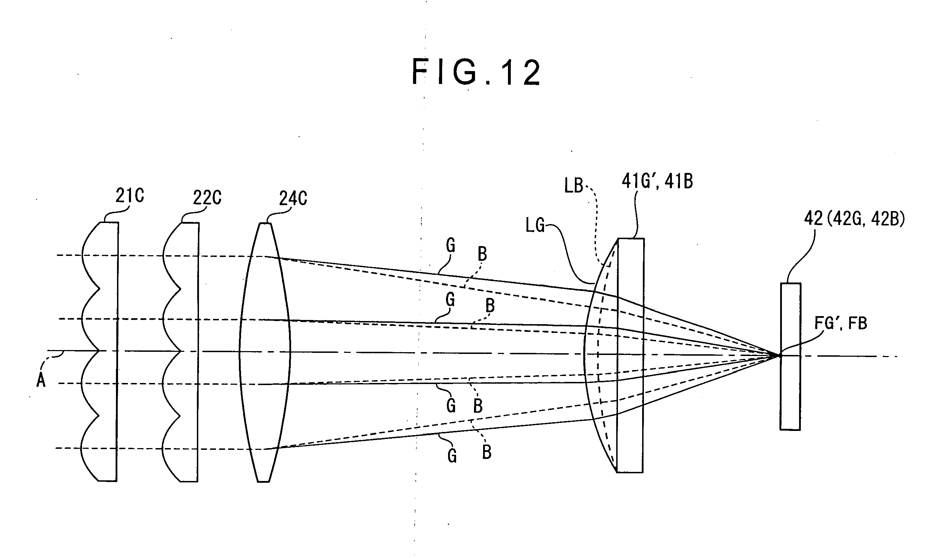

As shown in Fig. 12, the lens surface LB of the field lens 41B and the lens surface LG of the field lens 41 G' as chromatic-aberration correcting optical elements have spherical shapes with the profiles different from each other.
More specifically, the curvature radius of the lens surface LG of the field lens 41 G' is smaller than that of the lens surface LB of the field lens 41B.
Thus, by forming the curvature radius of the lens surface LG of the field lens 41 G' smaller than that of the lens surface LB of the field lens 41 B, the focus position of the green light formed by the superposing lens 24C is moved to the upstream of the optical path in a manner substantially same as the convex lens 50C described in the fourth exemplary embodiment.
As with the fourth exemplary embodiment, by forming the focus position FG' of the green light G on a position substantially coincident with the focus position FB of the blue light B while forming the focus positions on the position of the liquid crystal panels 42 (42G and 42B), both the illumination areas having the uniform illuminance of the blue light B and the illumination area having the uniform illuminance of the green light G can substantially coincide with the image formation areas of the liquid crystal panels 42 (42G and 42B). The field lens 41G' is designed in accordance with optical properties of the superposing lens 24C (chromatic aberration between green light and blue light).

In the fifth exemplary embodiment described above, as compared with the fourth exemplary embodiment, the focus position of the green light G can be moved to the upstream of the optical path by forming the curvature radius of the lens surface LG of the field lens 41 G' smaller than that of the lens surface LB of the field lens 41 B, so that the size of the illumination area having the uniform illuminance of the green light G can be substantially identical with that of the blue light B. Accordingly, only by changing the shapes of the field lenses respectively disposed on the upstream of the liquid crystal panels in the related art arrangement having the illumination optical device for forming the focus position FB of the blue light B at the position substantially coincident with the position of the liquid crystal panel 42B (image formation area), the light utilization efficiency can be enhanced. Therefore, an additional component such as the convex lens 50C in the fourth exemplary embodiment does not have to be provided, which does not affect size reduction and weight reduction of the optical device 3E.

### [Sixth Exemplary Embodiment]

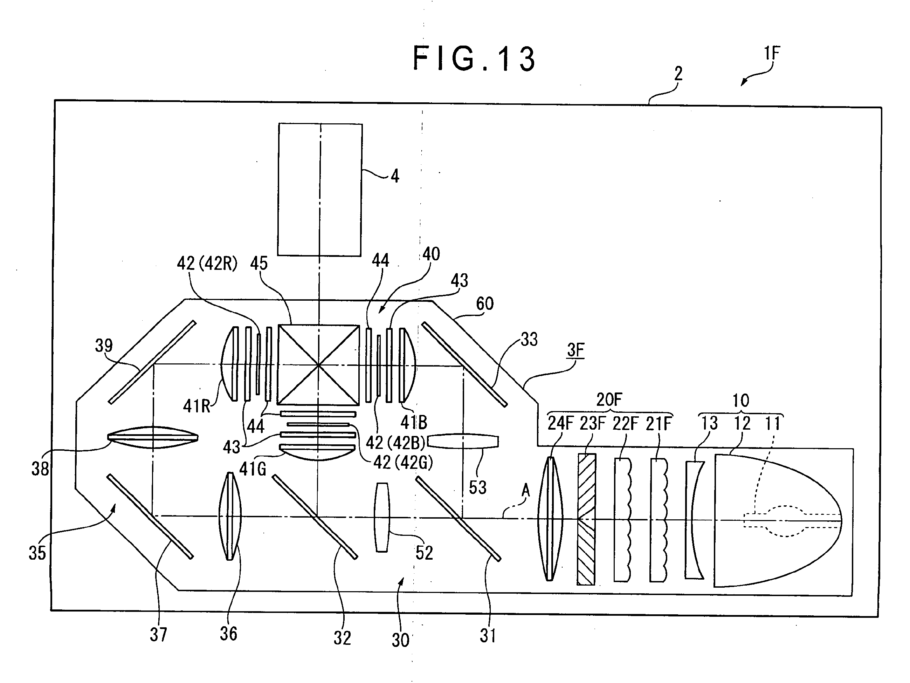

Next, a sixth exemplary embodiment of the present invention will be described with reference to the attached drawings.
In the following description, the same components as those in the first exemplary embodiment are indicated by the same reference symbols or numerals for omitting or simplifying the detailed description thereof.
As shown in Fig. 13, in a projector 1F of the present exemplary embodiment, an optical device 3F includes an illumination optical device 20F and convex lenses 52 and 53 in place of the illumination optical device 20 and the convex lens 50 described in the first exemplary embodiment.

The illumination optical device 20F has a first lens array 21 F, a second lens array 22F, a polarization converter 23F and a superposing lens 24F.
Since arrangements of the first lens array 21F, the second lens array 22F and the polarization converter 23F are similar to those of the first lens array 21, the second lens array 22 and the polarization converter 23 in the first exemplary embodiment, the detailed description thereof will be omitted.
The plurality of sub-beams having passed through the first lens array 21F, the second lens array 22F and the polarization converter 23F are condensed by the superposing lens 24F, the convex lenses 52 and 53 to be superposed on the image formation areas of the liquid crystal panels 42 of the electrooptic device 40.

To describe specifically for each color light, the image formation area of the liquid crystal panel 42B on which the blue light is incident is illuminated by the sub-beams superposed by the superposing lens 24F and the convex lens 53. The image formation area of the liquid crystal panel 42G on which the green light is incident is illuminated by the sub-beams superposed by the superposing lens 24F and the convex lens 52. Incidentally, the image formation area of the liquid crystal panel 42R on which the red light is incident is illuminated by the illumination beam superposed by the superposing lens 24F and the convex lens 52 and guided by the relay optical system 35.

The geometric length of the optical path from the superposing lens 24F to the convex lens 52 is equal to the geometric length of the optical path from the superposing lens 24F to the convex lens 53.
As in the superposing lens 24 in the first exemplary embodiment, refractive index of the superposing lens 24F varies depending on wavelength (color). Thus, as in the first exemplary embodiment, the focus position of the green light formed by the superposing lens 24F is formed on the downstream of the optical path relative to the focus position of the blue light. In short, the optical length of the blue light from the super posing lens 24F to the focus position is different from the optical length of the green light from the superposing lens 24F to the focus position.
When the convex lens 53 is disposed in the optical path of the blue light, the blue light is refracted by the convex lens 53 and the focus position of the blue light is moved to the upstream of the optical path. When the convex lens 52 is disposed in the optical path of the green light, the green light is refracted by the convex lens 52 and the focus position of the green light is moved to the upstream of the optical path. The optical length from the superposing lens 24F to the focus position of the blue light moved by the convex lens 53 becomes identical with the optical length of the green light from the superposing lens 24F to the focus position moved by the convex lens 52. The curvature radii of the lens surfaces of the convex lenses 52 and 53 are respectively designed in accordance with the optical properties of the superposing lens 24F (chromatic aberration between the green light and the blue light). More specifically, the curvature radius of the lens surface of the convex lens 53 is greater than that of the lens surface of the convex lens 52.

In the sixth exemplary embodiment described above, as compared to the first exemplary embodiment by respectively disposing the convex lenses 52 and 53 with the lens surfaces having different curvature radii on the optical paths of the green light and the blue light, the focus positions of the green light and the blue light are moved to the upstream of the optical paths, so that the optical lengths of the green light and the blue light from the superposing lens 24F to the respective focus positions can be substantially identical with each other. Thus, the size of the illumination area having the uniform illuminance of the green light and the size of the illumination area having the uniform illuminance of the blue light can be changed to be substantially identical with each other, thus enhancing the utilization efficiency of the light.
With the arrangement described above, a lens with relatively smaller refraction index can be used for the superposing lens 24F as compared to the superposing lens 24 in the first exemplary embodiment, so that chromatic aberration ranges among the respective color lights of R, G and B by the superposing lens 24F becomes smaller. Therefore, the chromatic aberrations between the color lights R, G and B can be easily corrected by the convex lenses 52 and 53.

### [Seventh Exemplary Embodiment]

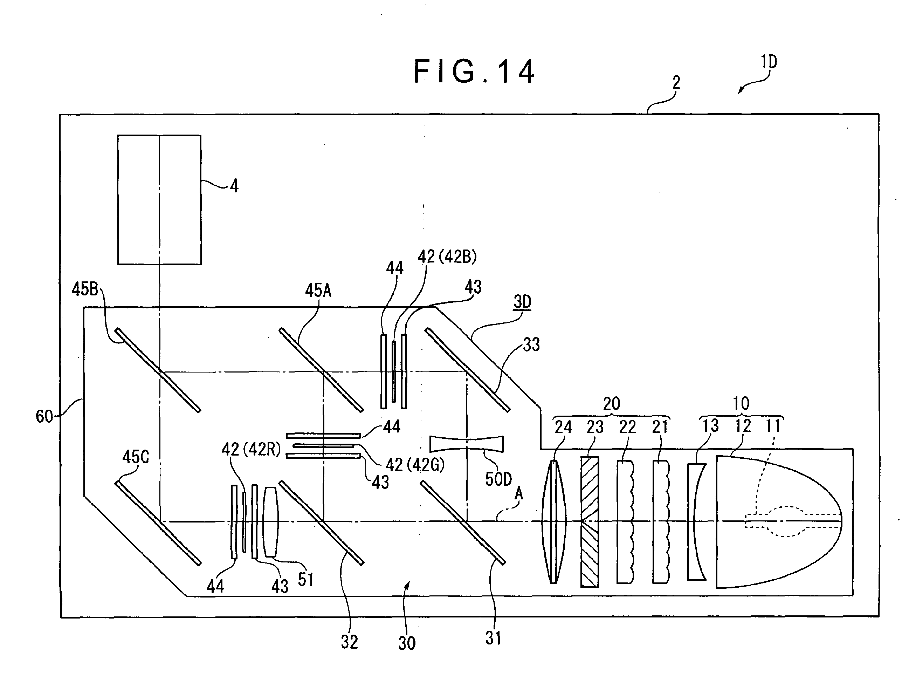

Next, a seventh exemplary embodiment of the present invention will be described with reference to the attached drawings.
In the following description, the same components as those in the first exemplary embodiment are indicated by the same reference symbols or numerals for omitting or simplifying the detailed description thereof.
In the respective exemplary embodiments described above, the optical devices 3, 3A, 3B, 3C, 3E and 3F each include the relay optical system 35.
On the other hand, in a projector 1D of the present exemplary embodiment, an optical device 3D does not include the relay optical system 35 described in the above exemplary embodiments, as shown in Fig. 14. In other words, the geometric lengths of the respective optical paths of the three color lights from the superposing lens 24 to the respective liquid crystal panels 42 are set to be identical with each other.

An optical device 3D does not include the cross dichroic prism 45 described in the respective exemplary embodiments, but includes two dichroic mirrors 45A and 45B and a reflection mirror 45C as shown in Fig. 14.
The dichroic mirror 45A is a mirror that transmits the blue light and reflects the green light. The dichroic mirror 45B is a mirror that transmits the red light and reflects the other lights.

As shown in Fig. 14, the liquid crystal panel 42B, the incident-side polarization plate 43 and the irradiation-side polarization plate 44 are disposed between the reflection mirror 33 and the dichroic mirror 45A. The liquid crystal panel 42G, the incident-side polarization plate 43 and the irradiation-side polarization plate 44 are disposed between the dichroic mirror 32 and the dichroic mirror 45A. The liquid crystal panel 42R, the incident-side polarization plate 43 and the irradiation-side polarization plate 44 are disposed between the dichroic mirror 32 and the reflection mirror 45C.
With such arrangement, the geometric lengths of the optical paths of the respective color lights from the superposing lens 24 to the respective liquid crystal panel's 42R, 42G and 42B can be identical.

Under such condition, an arrangement described below is employed to enhance the utilization efficiency of the light.
For instance, when the focus position of the green light formed by the superposing lens 24 substantially coincides with the position of the liquid crystal panel 42G (image formation area), as shown in Fig. 14, a concave lens 50D is disposed between the dichroic mirror 31 and the reflection mirror 33 as in the first exemplary embodiment, and a convex lens 51 having a reverse function to the concave lens 50D is disposed between the dichroic mirror 32 and the incident-side polarization plate 43 disposed in the optical path of the red light.

In the seventh exemplary embodiment, even when the geometric lengths of the optical paths of the respective color lights from the superposing lens 24 to the respective liquid crystal panels 42R, 42G and 42B are set to be identical with each other and when the focus position of the green light formed by the superposing lens 24 substantially coincides with the position of the liquid crystal panel 42G (image formation area), the focus positions of the respective color lights R, G and B can coincide with the positions of the liquid crystal panels 42 by moving the focus position of the blue light B to the downstream of the optical path by the concave lens 50D and by moving the focus position of the red light R to the upstream of the optical path by the convex lens 51. Thus, the illumination areas having the uniform illuminance of the respective color lights R, G and B can be changed to have sizes substantially identical with each other, thus enhancing the utilization efficiency of the light.

Incidentally, in addition to the arrangement using the concave lens 50D and the convex lens 51 described above, arrangements described below may also be employed.
For instance, as in the second exemplary embodiment, the concave lens 50D may not be included and the reflection mirror 33 may be replaced with the convex mirror 33'.
When the field lenses are disposed respectively on the upstream of the optical path of the liquid crystal panels 42R, 42G and 42B, the concave lens 50D and the convex lens 51 may not be included, and the lens surfaces of the field lens may be changed for the respective color lights so that the curvature radius of the lens surface of the field lens disposed in the optical path of the blue light is greater than that of the green light while the curvature radius of the lens surface of the field lens disposed in the optical path of the red light is smaller than that of the green light in a manner substantially similar to the third exemplary embodiment.

When the illumination optical device 20C described in the fourth exemplary embodiment may be used instead of the illumination optical device 20, and when the focus position of the blue light formed by the superposing lens 24C substantially coincides with the position of the liquid crystal panel 42B (image formation area), the following arrangements may be employed instead of the arrangement having the concave lens 50D and the convex lens 51 described above.
For instance, the concave lens 50D and the convex lens 51 may not be included, and the convex lens 50C may be disposed in the optical path of the green light (e.g. between the dichroic mirrors 31 and 32) as in the fourth exemplary embodiment,
Or, for instance, when the field lenses are disposed respectively on the upstream of the optical paths of the liquid crystal panels 42R, 42G and 42B, the concave lens 50D and the convex lens 51 may not be included, and the lens surfaces of the field lens may be changed for the respective color lights so that the curvature radius of the lens surface of the field lens disposed in the optical path of the green light is smaller than that of the blue light while the curvature radius of the lens surface of the field lens disposed in the optical path of the red light is smaller than that of the green light in a manner substantially similar to the fifth exemplary embodiment.

### [Eighth Exemplary Embodiment]

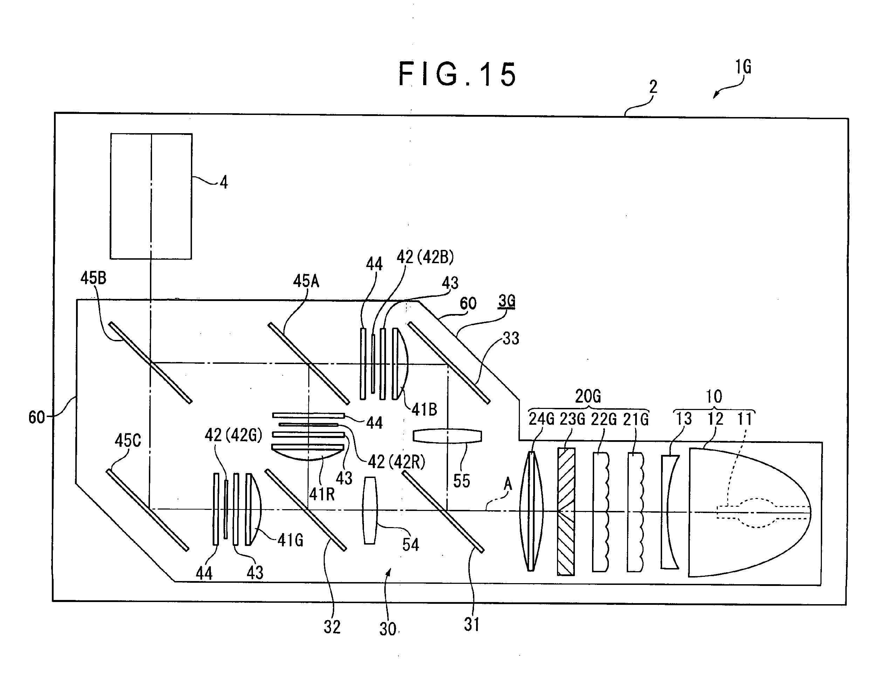

Next, an eighth exemplary embodiment of the present invention will be described with reference to the attached drawings.
In the following description, the same components as those in the seventh exemplary embodiment are indicated by the same reference symbols or numerals for omitting or simplifying the detailed description thereof.
As shown in Fig. 15, an optical device 3G of a projector 1G in the present exemplary embodiment includes convex lenses 54 and 55 and an illumination optical device 20G in place of the concave lens 50D, the convex lens 51 and the illumination optical device 20 described in the seventh exemplary embodiment.

The illumination optical device 20G has a first lens array 21 G, a second lens array 22G, a polarization converter 23G and a superposing lens 24G.
Since arrangements of the first lens array 21G, the second lens array 22G and the polarization converter 23G are similar to those of the first lens array 21, the second lens array 22 and the polarization converter 23 in the first exemplary embodiment, the detailed description thereof will be omitted.
The plurality of sub-beams having passed through the first lens array 21 G, the second lens array 22G and the polarization converter 23G are condensed by the superposing lens 24G, the convex lenses 54 and 55 to be superposed on the image formation area of the liquid crystal panel 42 of the electrooptic device 40.

To describe specifically for each color light, the image formation area of the liquid crystal panel 42B on which the blue light is incident is illuminated by the sub-beams superposed by the superposing lens 24G and the convex lens 55. The image formation area of the liquid crystal panel 42G on which the green light is incident is illuminated by the sub-beams superposed by the superposing lens 24G and the convex lens 54. The image formation area of the liquid crystal panel 42R on which the red light is incident is illuminated by the sub-beams superposed by the superposing lens 24G and the convex lens 54.

The geometric length of the optical path from the superposing lens 24G to the convex lens 54 is equal to the geometric length of the optical path from the superposing lens 24G to the convex lens 55.
As in the superposing lens 24 in the first exemplary embodiment, refractive index of the superposing lens 24G varies depending on wavelength (color). Thus, the focus position of the green light formed by the superposing lens 24G is formed on the downstream of the optical path relative to the focus position of the blue light, while the focus position of the red light formed by the superposing lens 24G is formed on the downstream of the optical path relative to the green light.

When the convex lens 55 is disposed in the optical path of the blue light, the blue light is refracted by the convex lens 55 and the focus position of the blue light is moved to the upstream of the optical path. When the convex lens 54 is disposed in the optical paths of the green light and the red light, the green light is refracted by the convex lens 54 and the focus position of the green light is moved to the upstream of the optical path, while the red light is refracted by the convex lens 54 and the focus position of the red light is moved to the upstream of the optical path. The optical length of the blue light from the superposing lens 24G to the focus position having been moved by the convex lens 55 becomes identical with the optical length of the green light from the superposing lens 24G to the focus position having been moved by the convex lens 54, while the optical length of the red light from the superposing lens 24G to the focus position having been moved by the convex lens 54 becomes slightly longer than the others. The curvature radii of the lens surfaces of the convex lenses 54 and 55 are respectively designed in accordance with the optical properties of the superposing lens 24G (chromatic aberration between the green light and the blue light). More specifically, the curvature radius of the lens surface of the convex lens 55 is formed to be greater than that of the lens surface of the convex lens 54.

Incidentally, among the red light (e.g. approximately 590-680 nm), the green light (e.g. approximately 500-590 nm) and the blue light (e.g. approximately 435-500 nm), since the chromatic aberration between the green light and the red light is smaller as compared to that between the green light and the blue light, the chromatic aberration between the red light and the green light does not have to be corrected. When the chromatic aberration between the red light and the green light is corrected, by appropriately changing the curvature radius of the lens surface of the field lens 41R disposed on the upstream of the optical path of the liquid crystal panel 42R on which the red light is incident, the optical length of the red light from the superposing lens 24G to the focus position can also be identical with the others.

In the eighth exemplary embodiment described above, as compared to the seventh exemplary embodiment, by respectively disposing the convex lenses 54 and 55 with the lens surfaces having different curvature radii on the optical paths of the green light, the red light as well as the blue light B, the focus positions of the respective color lights R, G and B are moved to the upstream of the optical paths, so that the optical lengths of the respective color lights R, G and B from the superposing lens 24G to the respective focus positions become substantially identical with each other. Thus, difference in size between the illumination areas having the uniform illuminance of the respective color lights R, G and B can be minimized, which results in enhancing the utilization efficiency of the light.
With the arrangement described above, a lens with relatively smaller refraction index can be used for the superposing lens 24G as with the superposing lens 24F in the sixth exemplary embodiment, so that the chromatic aberration ranges among the respective color lights of R, G and B caused by the superposing lens 24G becomes smaller as compared to the superposing lens 24 in the first exemplary embodiment. Therefore, the chromatic aberration among the color lights R, G and B can be easily corrected by the convex lenses 54 and 55.

While the present invention has been described above with the preferable exemplary embodiments, the present invention is not limited to the above-described exemplary embodiments, but includes improvements and modifications as long as an object of the present invention can be achieved.
In the respective exemplary embodiments, the optical devices 3, 3A, 3B, 3C, 3D, 3E, 3F and 3G include the superposing lenses 24, 24C, 24F and 24G that focus the light beam irradiated from the light source device 10 onto the liquid crystal panel 42, but the arrangement is not limited thereto. The illumination optical devices 20, 20C, 20F and 20G may not include the superposing lens 24, 24C, 24F and 24G. In such arrangement, the second lens arrays 22, 22C, 22F and 22G should be provided with a function for superposing the respective sub-beams split by the first lens arrays 21C, 21F and 21G on the liquid crystal panel 42.

In the respective exemplary embodiments, the integrator illumination system includes the first lens array 21, 21C, 21F 21G, the second lens array 22, 22C, 22F, 22G and the superposing lens 24, 24C, 24F, 24G, but the arrangements are not limited thereto. For instance, the integrator illumination system including an integrator rod using a columnar glass rod, a hollow grass rod, etc. and a relay lens may be employed. In such case, the chromatic-aberration correcting optical element should be so set as to correct the chromatic aberration between the integrator rod and the relay lens.

In the first through third exemplary embodiments, the chromatic-aberration correcting optical element is disposed on the optical path of the blue light among the three optical paths from the superposing lens 24 to the respective liquid crystal panels 42, but the arrangement is not limited thereto.
For instance, optical paths of red light and blue light may be designed to be reversed in the optical devices 3, 3A and 3B. In other words, positions of the liquid crystal panel 42R and the liquid crystal panel 42B may be reversed. With such designing, geometric length of the optical path of the green light is substantially identical with that of the red light. In contrast to the blue light, the focus position of the red light is formed on the downstream of the optical path relative to the focus position of the green light. Thus, to place the focus positions of the red light and green light at a position substantially coincident with each other, a chromatic-aberration correcting optical element having reverse function to that of the respective exemplary embodiments should be disposed on the optical path of the red light. For instance, in the first exemplary embodiment, a convex lens functioning reversely to the concave lens 50 should be provided. For instance, in the second exemplary embodiment, a concave mirror functioning reversely to the convex mirror 33' should be provided. In the third exemplary embodiment, although the curvature radius of the lens surface LB of the field lens 41 B' is greater than that of the lens surface LG of the field lens 41 G, the curvature radius of a lens surface of the field lens on an optical path of the red light should be smaller than that of the lens surface LG of the field lens 41G.

In the fourth through sixth embodiments described above, the arrangement of the chromatic-aberration collecting optical element is not limited to the ones described in the fourth through sixth embodiments.
For instance, in the optical devices 3C and 3E, the positions of the liquid crystal panels 42R and 42B may be exchanged so that the optical path of the red light and the optical path of the blue light are exchanged. Then, the illumination optical device adapted to form the focus position of the red light on the liquid crystal panel 42R should be employed. To form the focus positions of the red light and the green light at positions substantially coincident with each other, a chromatic-aberration correcting optical element having a reverse function to that of the respective exemplary embodiments may be disposed in the optical path of the green light. For instance, in the fourth exemplary embodiment, a concave lens functioning reversely to the convex lens 50C may be provided. In the fifth exemplary embodiment, although the curvature radius of the lens surface LG of the field lens 41 G' is formed to be smaller than that of the lens surface LB of the field lens 41B (field lens 41R), the curvature radius of the lens surface LG of the field lens 41 G' may be greater than that of the lens surface of the field lens on the optical path of the red light. In the sixth exemplary embodiment, the curvature radius of the lens surface of the convex lens disposed in the optical path of the red light may be formed to be smaller than that of the lens surfaces of the convex lenses disposed in the optical paths of the green light and the blue light.

In other words, regardless of the arrangement of the color-separating optical system, the present invention may be applied to an arrangement having optical paths of a plurality of color lights from an illumination optical device to respective liquid crystal panels, the geometric lengths of the optical paths being identical with each other. For instance, in an arrangement having a reference color with the focus position of an illumination optical device formed on a liquid crystal panel, when a color light traveling along an optical path having geometric length identical with that of an optical path of the reference color is a short-wavelength color light having a wavelength range shorter than that of the reference color, a chromatic-aberration correcting optical element (a concave lens, a convex mirror and/or a field lens with the curvature radius being thereof greater than that of a field lens on the optical path of the reference color light) for moving a focus position of the short-wavelength color light to the downstream of the optical path (for correcting the chromatic aberration between a long-wavelength color light and a short-wavelength color light of the illumination optical device) may be disposed in the optical path of the short-wavelength color light. Or, for instance, when a color light traveling along an optical path having geometric length identical with that of an optical path of the reference color is a long-wavelerigth color light having a wavelength range longer than that of the reference color, a chromatic-aberration correcting optical element (a convex lens, a concave mirror and/or a field lens with the curvature radius thereof being smaller than that of a field lens on the optical path of the reference color light) for moving a focus position of the long-wavelength color light to the upstream of the optical path (for correcting the chromatic aberration between a long-wavelength color light and a short-wavelength color light of the illumination optical device) may be disposed in the optical path of the long-wavelength color light.
As described above in an optical device in which optical paths of a plurality of color lights having geometric lengths from the illumination optical device to liquid crystal panels identical with each other are provided, by disposing a chromatic-aberration correcting optical element for correcting the chromatic aberration of the illumination optical device on an optical path of a color light with the focus position not being formed on a liquid crystal panel by the illumination optical device, focus positions of the respective color lights can substantially coincide with each other while illumination areas each having uniform illuminance of the respective color lights can substantially coincide with each other.

In the respective exemplary embodiments, the convex lenses 50C, 52, 53, 54 and 55 each use biconvex lens with both light-incident side and light-irradiation side being convex surfaces in the drawings, but any lens may be employed as long as the lens has a positive refraction power, which includes, for instance, a plano-convex with one side thereof being flat surface and a meniscus lens with the light-incident side being convex surface.
In the first through sixth exemplary embodiments, the concave lenses 50 and 50D each use biconcave lens with both light-incident side and light-irradiation side being concave surfaces in the drawings, but any lens may be employed as long as the lens has a negative refraction power, which includes, for instance, a plano-concave lens with one side thereof being flat surface and a meniscus lens with the light-incident side being concave surface.

In the seventh and eighth exemplary embodiments, the chromatic-aberration correcting optical element is provided for minimizing the differences in sizes among the illumination area on the liquid crystal panel 42R for the red light R, the illumination area on the liquid crystal panel 42G for the green light G and the illumination area on the liquid crystal panel 42B for the blue lights B, but the chromatic-aberration correcting optical element may be so disposed as to minimize the difference in size between at least two of the illumination areas having the uniform illumination on the liquid crystal panels of the red light R, green light G and blue light B. In the red light R (e.g. 590-680 nm), green light G (e.g. 500-590 nm), and blue light B (e.g. 435-500 nm), since the chromatic aberration between the red light R and the blue light B and the chromatic aberration between the green light G and the blue light B are greater than the chromatic aberration between other combinations, the chromatic-aberration correcting optical element is preferably provided to correct the chromatic aberration between the blue light B and at least one of the red light R and green light G.

In the respective exemplary embodiments, an arrangement having the optical devices 3, 3A, 3B, 3C, 3D, 3E, 3F and 3G each having substantially L-shape in plan view is exemplified, but for instance, an arrangement having a substantially U-shape in plan view may also be employed.
In the respective exemplary embodiments, the color-separating optical device 30 separates the light beam into the three color lights of red, green and blue, but the color-separating optical device 30 may separate the light beam into two color lights or four or more color lights. In such case, the liquid crystal panel 42 should also be provided by the number corresponding to the number of color lights separated by the color-separating optical device 30.
In the respective exemplary embodiments, the transmissive liquid crystal panel having different light-incident side and light-irradiation side is employed. However, the reflective liquid crystal panel having the same light-incident side and irradiation side may also be employed.
In the respective exemplary embodiments, the liquid crystal panel is used as an optical modulator, but an optical modulator other than liquid crystal, such as a device employing a micro mirror, may also be used. In such case, the incident-side and irradiation-side polarization plates may not be included.
In the respective exemplary embodiments, only a front-type projector that projects an image in a direction for observing a screen is exemplified, but the present invention may also be applied to a rear-type projector that projects an image in a direction opposite to the direction for observing the screen.

Although the best mode for implementing the present invention has been disclosed above, the present invention is not limited thereto. In other words, while the present invention is mainly illustrated and described on the specific exemplary embodiments, a person skilled in the art can modify the specific arrangement such as shape, material, quantity in the above-described exemplary embodiments as long as a technical idea and an object of the present invention can be achieved.
Therefore, the description limiting the shapes and the materials disclosed above is intended to be illustrative for easier understanding and not to limit the invention, hence the present invention includes the description using a name of component without a part of or all of the limitation on the shape and the material etc.

As described above, with enhanced utilization efficiency of the light beam irradiated from the light source, the projector according to the exemplary aspect of the present invention is useful as a projector used in a home theater and in a presentation.
The priority application Number JP2004-150426 upon which this patent application is based is hereby incorporated by reference.

## Claims

1. A projector comprising:
an illumination optical device having an integrator illumination system that irradiates an illumination light beam;
a color-separating optical device that separates the light beam irradiated by the illumination optical device into first, second and third color lights;
first, second and third optical modulators that modulate the first through third color lights separated by the color-separating optical device in accordance with image information;
a color-combining optical device that combines the color lights modulated by the first through third optical modulators to form an optical image; and
a projection optical device for projecting the optical image formed by the color-combining optical device in an enlarged manner,
a geometric length of an optical path from the illumination optical device to the first optical modulator is set to be identical with a geometric length of an optical path from the illumination optical device to the second optical modulator,
a chromatic-aberration correcting optical element is disposed in at least one of the optical path of the first color light separated from the second color light to reach the first optical modulator and the optical path of the second color light separated from the first color light to reach the second optical modulator, and
the chromatic-aberration correcting optical element corrects chromatic aberration between the first color light and the second color light so that difference in size between a first illumination area on the first optical modulator and a second illumination area on the second optical modulator is minimized.

2. The projector according to claim 1,
the second color light has a wavelength range shorter than a wavelength range of the first color light, and
the chromatic-aberration correcting optical element is constituted with a concave lens or a convex mirror, which is disposed only on the optical path of the second color light.

3. The projector according to claim 1,
the second color light has a wavelength range shorter than a wavelength range of the first color light,
first, second and third condenser lenses are respectively disposed on the upstream of the first through third optical modulators,
the chromatic-aberration correcting optical element is constituted with the second condenser lens, and
the curvature radius of a lens surface of the second condenser lens is formed to be greater than the curvature radius of a lens surface of the first condenser lens.

4. The projector according to claim 1,
the second color light has a wavelength range shorter than a wavelength range of the first color light,
first, second and third condenser lenses are respectively disposed on the upstream of the first through third optical modulators,
the chromatic-aberration correcting optical element includes a first convex lens disposed on the upstream of the first condenser lens in the optical path of the first color light and a second convex lens disposed on the upstream of the second condenser lens in the optical path of the second color light, and
the curvature radius of a lens surface of the second convex lens is formed to be greater than the curvature radius of a lens surface of the first convex lens.

5. The projector according to claim 1,
the second color light has a wavelength range longer than a wavelength range of the first color light, and
the chromatic-aberration correcting optical element is constituted with a convex lens or a concave mirror, which is disposed only on the optical path of the second color light.

6. A projector comprising:
an illumination optical device having an integrator illumination optical system that irradiates an illumination light beam;
a color-separating optical device that separates the light beam irradiated by the illumination optical device into first, second and third color lights;
first, second and third optical modulators that modulate the first through third color lights separated by the color-separating optical device in accordance with image information;
a color-combining optical device that combines the color lights modulated by the first through third optical modulators to form an optical image; and
a projection optical device for projecting the optical image formed by the color-combining optical device in an enlarged manner,
geometric lengths of the respective optical paths from the illumination optical device to the first through third optical modulators are set to be identical with each other,
a chromatic-aberration correcting optical element is disposed in at least one of the optical path of the first color light isolated from the other color lights to reach the first optical modulator, the optical path of the second color light isolated from the other color lights to reach the second optical modulator, and the optical path of the third color light isolated from the other color lights to reach the third optical modulator, and
the chromatic-aberration correcting optical element corrects chromatic aberration of at least two of the first through third color lights so that difference in size of the respective illumination areas on the first through third optical modulators is minimized.

7. The projector according to claim 6,
the first color light has a wavelength range longer than wavelength ranges of the second and third color lights, and
the chromatic-aberration correcting optical element is constituted with a concave lens or a convex mirror, which is disposed in at least one of the optical path of the second color light and the optical path of the third color light.

8. The projector according to claim 6, wherein
the first color light has a wavelength range shorter than wavelength ranges of the second and third color lights, and
the chromatic-aberration correcting optical element is constituted with a convex lens or a concave mirror, which is disposed in at least one of the optical path of the second color light or the optical path of the third color light.

9. The projector according to claim 6,
the second color light has a wavelength range shorter than a wavelength range of the first color light,
the third color light has a wavelength range longer than a wavelength range of the first color light,
the chromatic-aberration correcting optical element is disposed in at least one of the optical path of the second color light and the optical path of the third color light,
the chromatic-aberration correcting optical element disposed in the optical path of the second color light is constituted with a concave lens or a convex mirror, and
the chromatic-aberration correcting optical element disposed in the optical path of the third color light is a convex lens or a concave mirror.

10. The projector according to claim 6,
the first color light has a wavelength range longer than wavelength ranges of the second and third color lights,
first, second and third condenser lenses are respectively disposed on the upstream of the first through third optical modulators,
the chromatic-aberration correcting optical element is constituted with at least one of the second and the third condenser lenses, and
the curvature radius of a lens surface of the condenser lens constituting the chromatic-aberration correcting optical element is formed to be greater than the curvature radius of a lens surface of the first condenser lens.

11. The projector according to claim 6,
the first color light has a wavelength range shorter than wavelength ranges of the second and third color lights, and
first, second and third condenser lenses are respectively disposed on the upstream of the first through third optical modulators,
the chromatic-aberration correcting optical element is constituted with at least one of the second and the third condenser lenses, and
the curvature radius of a lens surface of the condenser lens constituting the chromatic-aberration correcting optical element is formed to be smaller than the curvature radius of a lens surface of the first condenser lens.

12. The projector according to claim 6,
the second color light has a wavelength range shorter than a wavelength range of the first color light,
the third color light has a wavelength range longer than a wavelength range of the first color light,
first, second and third condenser lenses are respectively disposed on the upstream of the first through third optical modulators,
the chromatic-aberration correcting optical element is constituted with at least one of the second and the third condenser lenses,
when the second condenser lens constitutes the chromatic-aberration correcting optical element, the curvature radius of a lens surface of the second condenser lens is formed to be greater than the curvature radius of a lens surface of the first condenser lens, and
when the third condenser lens constitutes the chromatic-aberration correcting optical element, the curvature radius of a lens surface of the third condenser lens is formed to be smaller than the curvature radius of a lens surface of the first condenser lens.

13. The projector according to claim 6,
the second color light has a wavelength range shorter than a wavelength range of the first color light,
first, second and third condenser lenses are respectively disposed on the upstream of the first through third optical modulators,
the chromatic-aberration correcting optical element includes a first convex lens disposed on the upstream of the first condenser lens in the optical path of the first color light and a second convex lens disposed on the upstream of the second condenser lens in the optical path of the second color light, and
the curvature radius of a lens surface of the second convex lens is formed to be greater than the curvature radius of a lens surface of the first convex lens.

14. The projector according to claim 6,
the second color light has a wavelength range shorter than a wavelength range of the first color light, and
the third color light has a wavelength range shorter than a wavelength range of the second color light,
first, second and third condenser lenses are respectively disposed on the upstream of the first through third optical modulators,
the chromatic-aberration correcting optical element includes a first convex lens disposed on the upstream of the first condenser lens in the optical path of the first color light, a second convex lens disposed on the upstream of the second condenser lens in the optical path of the second color light and a third convex lens disposed on the upstream of the third condenser lens in the optical path of the third color light,
the curvature radius of a lens surface of the second convex lens is formed to be greater than the curvature radius of a lens surface of the first convex lens, and
the curvature radius of a lens surface of the third convex lens is formed to be greater than the curvature radius of a lens surface of the second convex lens.
